(19) Europäisches Patentamt
European Patent Office
Office européen des brevets

(11) **EP 1 835 003 A2**

(12) **EUROPEAN PATENT APPLICATION**

(43) Date of publication:
**19.09.2007 Bulletin 2007/38**

(51) Int Cl.:
*C09J 7/02* *(2006.01)*    *G02F 1/13* *(2006.01)*

(21) Application number: **07005407.7**

(22) Date of filing: **15.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **15.03.2006 JP 2006070348**
**23.01.2007 JP 2007012883**

(71) Applicant: **NITTO DENKO CORPORATION**
**Osaka (JP)**

(72) Inventors:
• **Hiramatsu, Tsuyoshi**
**Ibaraki-shi,**
**Osaka (JP)**

• **Tosaki, Yutaka**
**Ibaraki-shi,**
**Osaka (JP)**
• **Yokoyama, Junji**
**Ibaraki-shi,**
**Osaka (JP)**
• **Soeda, Yoshikazu**
**Ibaraki-shi,**
**Osaka (JP)**

(74) Representative: **Grünecker, Kinkeldey,**
**Stockmair & Schwanhäusser**
**Anwaltssozietät**
**Maximilianstrasse 58**
**80538 München (DE)**

(54) **Double-faced pressure-sensitive adhesive tape or sheet, and liquid crystal apparatus**

(57) The present invention relates to a double-faced pressure-sensitive adhesive tape or sheet, which comprises: a base material; a pressure-sensitive adhesive layer disposed on one surface of the base material, which is a pressure-sensitive adhesive layer (A) including a pressure-sensitive adhesive composition containing an acrylic polymer (A1), and a silicone rubber fine particle (A2) in a proportion of from 3 to 50 parts by weight with respect to 100 parts by weight of the acrylic polymer (A1), the layer (A) being used so as to adhere to the liquid crystal display module unit; and another pressure-sensitive adhesive layer disposed on the other surface of the base material, which is a pressure-sensitive adhesive layer (B) including a pressure-sensitive adhesive composition containing an acrylic polymer (B1), and a low-molecular weight polymer component (B2), which contains, as a principal monomer component, an ethylenic unsaturated monomer having a glass transition temperature of from 60 to 190°C when it is formed into a homopolymer and having a cyclic structure within the molecule thereof, and which has a weight-average molecular weight equal to or higher than 3,000 but lower than 20,000, in a proportion of from 5 to 35 parts by weight with respect to 100 parts by weight of the acrylic polymer (B1), the layer (B) being used so as to adhere to the backlight, in which the pressure-sensitive adhesive tape or sheet is for use in fixing a liquid crystal display module unit and a backlight unit.

FIG. 2

**Description**

FIELD OF THE INVENTION

The present invention relates to a double-faced pressure-sensitive adhesive tape or sheet, and to a liquid crystal display apparatus. More particularly, it relates to a double-faced pressure-sensitive adhesive tape or sheet having a light-reflective property and/or a light-shielding property, and to a liquid crystal display apparatus utilizing such double-faced pressure-sensitive adhesive tape or sheet.

BACKGROUND OF THE INVENTION

In so-called "mobile phones" and the like, a liquid crystal display module unit for an image display and a backlight unit are fixed with each other by a pressure-sensitive adhesive tape or sheet, and a double-faced pressure-sensitive adhesive tape or sheet having a reflective property or a light-shielding property is used for such purpose (cf. Patent References 1 to 13).

Patent Reference 1: JP-A-2004-59723
Patent Reference 2: JP-A-2002-235053
Patent Reference 3: JP-A-2002-350612
Patent Reference 4: JP-A-2004-161955
Patent Reference 5: JP-A-2004-184443
Patent Reference 6: JP-A-2004-231736
Patent Reference 7: JP-A-2004-231737
Patent Reference 8: JP-A-2004-156015
Patent Reference 9: JP-A-2004-244499
Patent Reference 10: JP-A-2002-249741
Patent Reference 11: JP-A-2004-53759
Patent Reference 12: JP-A-2002-23663
Patent Reference 13: JP-A-2006-10931

SUMMARY OF THE INVENTION

As a conventional double-faced pressure-sensitive adhesive tape or sheet having a light-reflective property and/or a light-shielding property for use in fixing a liquid crystal display module unit and a backlight unit, employed commonly is a double-faced pressure-sensitive adhesive tape or sheet having a light-reflective property and/or a light-shielding property of a structure, which normally has pressure-sensitive adhesive layers on both surfaces of a base material and has a reflective layer and/or a light-shielding layer (such tape or sheet being also called "light-reflective/ shielding double-faced pressure-sensitive adhesive tape or sheet"). Since the backlight unit is commonly formed with a polycarbonate substrate, the light-reflective/shielding double-faced pressure-sensitive adhesive tape or sheet, when adhered to the backlight unit, is normally adhered to the surface of the polycarbonate substrate of the backlight unit. On the other hand, the surface of the liquid crystal display module unit, such as LCD, is commonly subjected to a coating treatment with a hard coat agent, and constitutes a difficultly adherable surface showing a low adhesion property to an ordinary pressure-sensitive adhesive tape, possibly because such hard coat agent contains a trace amount of a silicone-based compound.

Further, the liquid crystal display module is connected to a flexible printed circuit (FPC), which is ordinarily used, in so-called mobile phone or the like, in a bent state. Consequently, the liquid crystal display module or the backlight unit is subjected to a repulsive force by the bending of FPC, so that the light-reflective/shielding doubled-faced pressure-sensitive adhesive tape or sheet is liable to be peeled. Therefore, a light-reflective/shielding double-faced pressure-sensitive adhesive tape or sheet having a pressure-sensitive adhesive layer containing a rather high amount of a crosslinking agent and having a high crosslinking density is utilized for increasing the resistance to the repulse force.

However, the polycarbonate substrate in the backlight unit contains absorbed moisture as it is made of polycarbonate resin, and, with the lapse of time (particularly under a high temperature), may release air (out-gassing) which presumably results from the absorbed moisture or from the remaining monomer component and which causes bubble formation. Therefore, when the light-reflective/shielding double-faced pressure-sensitive adhesive tape or sheet is adhered on the polycarbonate substrate, a separation or a peeling occurs.with the lapse of time at the adhering interface between the polycarbonate substrate and the light-reflective/shielding double-faced pressure-sensitive adhesive tape or sheet by bubbles (foaming) generated from the polycarbonate substrate. When such separation or peeling occurs, the light-reflective/shielding double-faced pressure-sensitive adhesive tape or sheet is eventually peeled off from the backlight unit as the repulsive force by the bent FPC is also exerted.

Further, in case of containing the liquid crystal display module and the backlight unit in a casing, a clearance between both units and the casing is only about 0.3 mm, and, for example, when the mobile phone is accidentally dropped, the liquid crystal display module may be displaced and may come into contact with the casing when the pressure-sensitive adhesive layer is soft, thus resulting in a detriment that a glass substrate of the liquid crystal display is cracked by the impact. Therefore, as a double-faced pressure-sensitive adhesive tape satisfactory in a drop impact resistance and a repulsion resistance, there is disclosed a double-faced pressure-sensitive adhesive tape including a pressure-sensitive adhesive layer having a maximum of loss tangent within a temperature range of from -40 to -15°C and a pressure-sensitive adhesive layer having a gel fraction of from 15 to 45% (JP-A-2006-10931). However, even such pressure-sensitive adhesive layer still involve drawbacks not having a sufficient cohesive force, and, in the repulsion resistance, and being stretched to cause a separation or a peeling, leading to a large displacement amount in case of a dropping.

In consideration of the foregoing, an object of the present invention is to provide a double-faced pressure-sensitive adhesive tape or sheet, particularly a double-faced pressure-sensitive adhesive tape or sheet having a light-reflective property and/or a light-shielding property, capable of effectively fixing the liquid crystal display module unit and the backlight unit with an excellent repulsion resistance and an excellent dropping impact resistance, and to provide a liquid crystal display apparatus utilizing such double-faced pressure-sensitive adhesive tape or sheet.

As a result of intensive investigations undertaken by the present inventors, it is found possible to improve the repulsion resistance and the dropping impact resistance, by forming the pressure-sensitive adhesive layer at the side of the liquid crystal display module unit and the pressure-sensitive adhesive layer at the side of the backlight unit respectively by specified pressure-sensitive adhesive compositions. The present invention has been made based on these findings.

BRIEF DESCRIPTION OF DRAWINGS

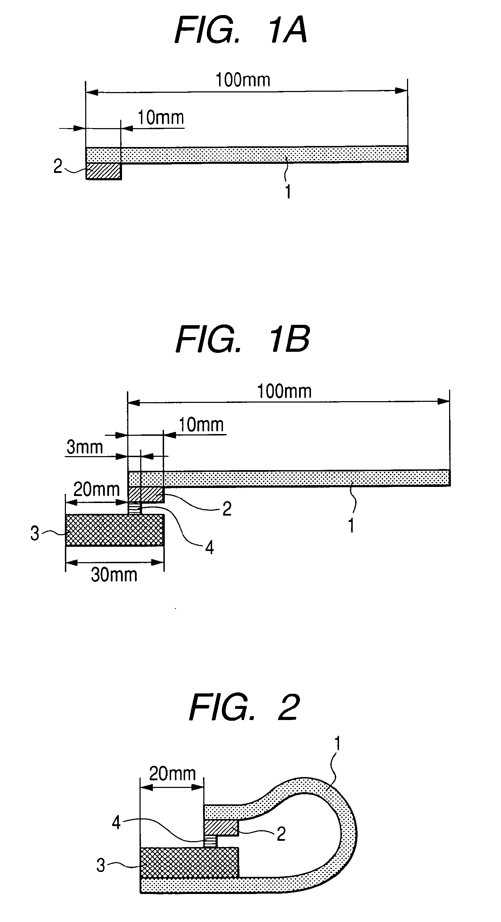

Figs. 1A and 1B are schematic views illustrating a method for evaluating the repulsion resistance, used in evaluating the repulsion resistance of Examples, in which Fig. 1A is a schematic cross-sectional view illustrating a state where a member having a surface coating with a hard coat agent is adhered to a polyethylene terephthalate film; and Fig. 1B is a schematic cross-sectional view illustrating a state where the adhered members shown in Fig. 1A are adhered to a polycarbonate plate by a double-faced pressure-sensitive adhesive tape or sheet.

Fig. 2 is a schematic lateral view illustrating a method for evaluating the repulsion resistance, used in evaluating the repulsion resistance of Examples, in which the polyethylene terephthalate film is bent into a loop for evaluating the repulsion resistance.

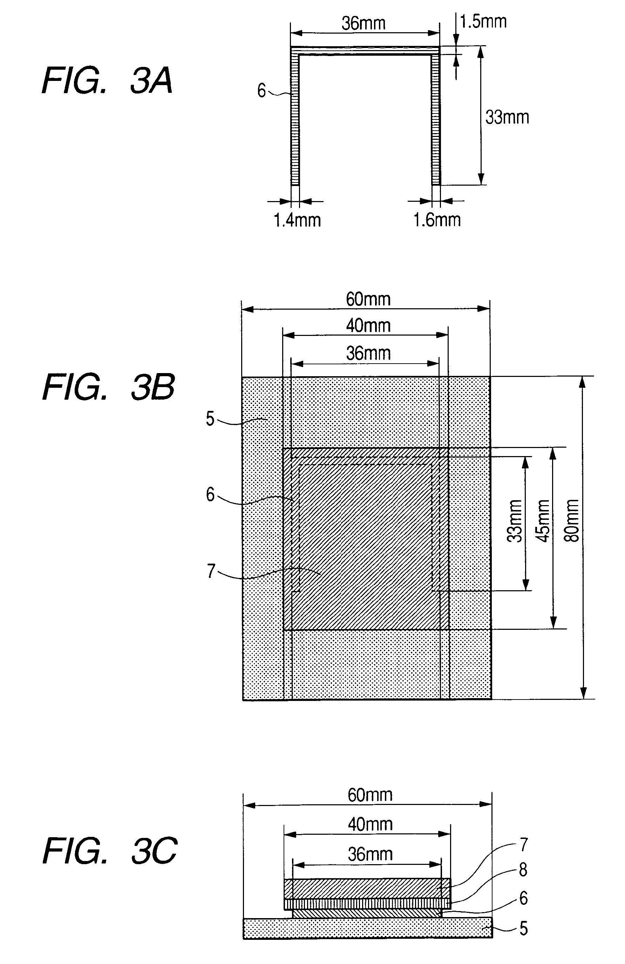

Figs. 3A, 3B and 3C are schematic views illustrating a method for evaluating the dropping impact resistance, used in evaluating the dropping impact resistance of Examples, in which Fig. 3A is a schematic view illustrating a shape of a punched double-faced pressure-sensitive adhesive tape or sheet; Fig. 3B is a schematic plan view illustrating two polycarbonate plates adhered with a double-faced pressure-sensitive adhesive tape or sheet; and Fig. 3C is a schematic lateral view of Fig. 3B.

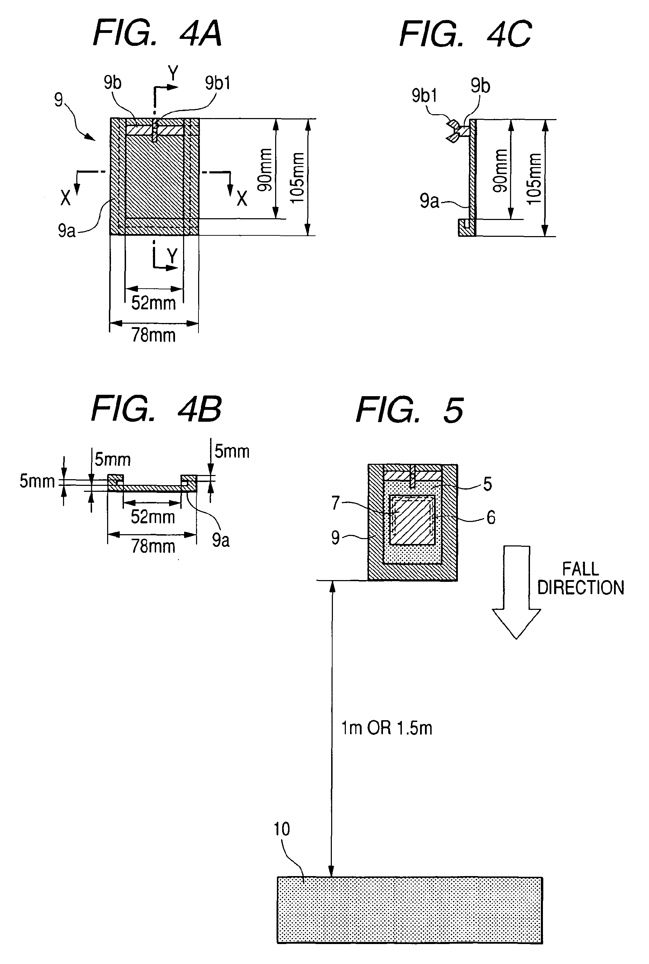

Fig. 4A, 4B and 4C are schematic views illustrating the shape of a holder for fixing the two polycarbonate plates adhered by the double-faced pressure-sensitive adhesive tape or sheet for evaluating the dropping impact resistance, in which Fig. 4A is a schematic plan view, Fig. 4B is a schematic cross-sectional view along a line X-X in Fig. 4A, and Fig. 4C is a schematic cross-sectional view along a line Y-Y in Fig. 4A.

Fig. 5 is a schematic view illustrating a method for evaluating the dropping impact resistance, used in evaluating the dropping impact resistance of Examples, and illustrating a state where the holder, in which the two polycarbonate plates adhered by the double-faced pressure-sensitive adhesive tape or sheet are fixed, is dropped from a height of 1 m or 1.5 m.

Description of Symbols

1  polyethylene terephthalate film
2  "APCGH1" (trade name)
3  polycarbonate plate
4  double-faced pressure-sensitive adhesive tape or sheet
5  polycarbonate plate

6       double-faced pressure-sensitive adhesive tape or sheet
7       polycarbonate plate
8       "APCGH1" (trade name)
9       holder
9a      main body portion
9b      engaging member
9b1     screw
10      marble

DETAILED DESCRIPTION OF THE INVENTION

Namely, the present invention relates to the followings.

(1) A double-faced pressure-sensitive adhesive tape or sheet, which comprises:

a base material;
a pressure-sensitive adhesive layer disposed on one surface of the base material, which is a pressure-sensitive adhesive layer (A) including a pressure-sensitive adhesive composition containing:

an acrylic polymer (A1), and
a silicone rubber fine particle (A2) in a proportion of from 3 to 50 parts by weight with respect to 100 parts by weight of the acrylic polymer (A1),
said layer (A) being used so as to adhere to the liquid crystal display module unit; and
another pressure-sensitive adhesive layer disposed on the other surface of the base material, which is a pressure-sensitive adhesive layer (B) including a pressure-sensitive adhesive composition containing:

an acrylic polymer (B1), and
a low-molecular weight polymer component (B2), which contains, as a principal monomer component, an ethylenic unsaturated monomer having a glass transition temperature of from 60 to 190°C when it is formed into a homopolymer and having a cyclic structure within the molecule thereof, and which has a weight-average molecular weight equal to or higher than 3,000 but lower than 20,000, in a proportion of from 5 to 35 parts by weight with respect to 100 parts by weight of the acrylic polymer (B 1),
said layer (B) being used so as to adhere to the backlight,

wherein said pressure-sensitive adhesive tape or sheet is for use in fixing a liquid crystal display module unit and a backlight unit.
(2) A double-faced pressure-sensitive adhesive tape or sheet having a light-reflective property and/or a light-shielding property, which comprises:

a base material;
a pressure-sensitive adhesive layer disposed on one surface of the base material, which is a pressure-sensitive adhesive layer (A) including a pressure-sensitive adhesive composition containing:

an acrylic polymer (A1), and
a silicone rubber fine particle (A2) in a proportion of from 3 to 50 parts by weight with respect to 100 parts by weight of the acrylic polymer (A1),
said layer (A) being used so as to adhere to the liquid crystal display module unit; and
another pressure-sensitive adhesive layer disposed on the other surface of the base material, which is a pressure-sensitive adhesive layer (B) including a pressure-sensitive adhesive composition containing:

an acrylic polymer (B1), and
a low-molecular weight polymer component (B2), which contains, as a principal monomer component, an ethylenic unsaturated monomer having a glass transition temperature of from 60 to 190°C when it is formed into a homopolymer and having a cyclic structure within the molecule thereof, and which has a weight-average molecular weight equal to or higher than 3,000 but lower than 20,000, in a proportion of from 5 to 35 parts by weight with respect to 100 parts by weight of the acrylic polymer (B1),
said layer (B) being used so as to adhere to the backlight,
said pressure-sensitive adhesive tape or sheet having a reflectance of 60% or higher and/or a transmittance of 0.3% or lower on at least one surface thereof, and

wherein said pressure-sensitive adhesive tape or sheet is for use in fixing a liquid crystal display module unit and a backlight unit.

(3) The double-faced pressure-sensitive adhesive tape or sheet according to (1) or (2), wherein the pressure-sensitive adhesive layer (A) and/or the pressure-sensitive adhesive layer (B) has a gel fraction of from 51 to 70wt%.

(4) The double-faced pressure-sensitive adhesive tape or sheet according to any one of (1) to (3), wherein the acrylic polymer (A1) in the pressure-sensitive adhesive composition for forming the pressure-sensitive adhesive layer (A) is an acrylic polymer containing, as a principal monomer component, a (meth)acrylic acid alkyl ester having 6 to 12 carbon atoms in the alkyl group thereof, and, as a monomer component, a carboxyl group-containing monomer in a proportion of from 3 to 10 parts by weight with respect to 100 parts by weight of all the monomer components.

(5) The double-faced pressure-sensitive adhesive tape or sheet according to any one of (1) to (4), wherein the acrylic polymer (A1) in the pressure-sensitive adhesive composition for forming the pressure-sensitive adhesive layer (A) has a weight-average molecular weight of from 700,000 to 2,000,000.

(6) The double-faced pressure-sensitive adhesive tape or sheet according to any one of (1) to (5), wherein the pressure-sensitive adhesive composition for forming the pressure-sensitive adhesive layer (B) further comprises a silicone rubber fine particle.

(7) The double-faced pressure-sensitive adhesive tape or sheet according to any one of (1) to (6), wherein the acrylic polymer (B1) in the pressure-sensitive adhesive composition for forming the pressure-sensitive adhesive layer (B) is an acrylic polymer containing, as a principal monomer component, a (meth)acrylic acid alkyl ester having 4 to 12 carbon atoms in the alkyl group thereof, and, as a monomer component, a carboxyl group-containing monomer in a proportion of from 3 to 10 parts by weight with respect to 100 parts by weight of all the monomer components.

(8) The double-faced pressure-sensitive adhesive tape or sheet according to any one of (2) to (7), which has a reflective layer for providing a reflectance of 60% or higher on at least one surface of said pressure-sensitive adhesive tape or sheet, said reflective layer being a white-colored layer having a white color or a silver-colored layer having a silver color, wherein the reflective layer is the base material, the pressure-sensitive adhesive layer, or an optional layer other than the base material and the pressure-sensitive adhesive layer.

(9) The double-faced pressure-sensitive adhesive tape or sheet according to any one of (2) to (8), which has a light-shielding layer for providing a transmittance of 0.3% or less, said light-shielding layer being a black-colored layer having a black color, wherein the reflective layer is the base material, the pressure-sensitive adhesive layer, or an optional layer other than the base material and the pressure-sensitive adhesive layer.

In the present invention, the pressure-sensitive adhesive layer (A) and/or the pressure-sensitive adhesive layer (B) preferably has a gel fraction of from 51 to 70wt%.

The acrylic polymer (A1) in the pressure-sensitive adhesive composition for forming the pressure-sensitive adhesive layer (A) may advantageously be an acrylic polymer containing a (meth)acrylic acid alkyl ester having 6 to 12 carbon atoms in the alkyl group thereof as a principal monomer component and a carboxyl group-containing monomer as a monomer component in a proportion of from 3 to 10 parts by weight with respect to 100 parts by weight of all the monomer components. Further, the acrylic polymer (A1) in the pressure-sensitive adhesive composition for forming the pressure-sensitive adhesive layer (A) advantageously has a weight-average molecular weight of from 700,000 to 2,000,000.

The pressure-serisitive adhesive composition for forming the pressure-sensitive adhesive layer (B) preferably further contains silicone rubber fine particles. Further, the acrylic polymer (B1) in the pressure-sensitive adhesive composition for forming the pressure-sensitive adhesive layer (B) may advantageously be an acrylic polymer containing a (meth)acrylic acid alkyl ester having 4 to 12 carbon atoms in the alkyl group thereof as a principal monomer component and a carboxyl group-containing monomer as a monomer component in a proportion of from 3 to 10 parts by weight with respect to 100 parts by weight of all the monomer components.

Further, as a reflective layer for providing a reflectance of 60% or higher on at least one surface the pressure-sensitive adhesive tape or sheet, a white-colored layer having a white color or a silver-colored layer having a silver color may be employed advantageously. Further, as a light-shielding layer for providing a transmittance of 0.3 % or less, a black-colored layer having a black color may be employed advantageously.

Further, the present invention also relates to the followings.

(10) A liquid crystal display apparatus comprising:

> a liquid crystal display module unit;
> a backlight unit; and
> the double-faced pressure-sensitive adhesive tape or sheet according to any one of (1) to (9), which fixes the liquid crystal display module unit and the backlight unit.

(11) The liquid crystal display apparatus according to (10), wherein the backlight unit comprises a substrate formed by polycarbonate.

In the present invention, the backlight unit preferably includes a substrate formed by polycarbonate.

The double-faced pressure-sensitive adhesive tape or sheet of the present invention, having the aforementioned constitution, is capable of effectively fixing the liquid crystal display module unit and the backlight unit with an excellent repulsion resistance and an excellent dropping impact resistance. Particularly, in the case that the double-faced pressure-sensitive adhesive tape or sheet is a light-reflective/shielding double-faced pressure-sensitive adhesive tape or sheet, the light-shielding layer suppresses a leakage of the light from the backlight to the surface of LCD, thereby improving the visibility of the liquid crystal display. Further, the reflective layer reflects the light from the backlight, thereby improving the luminance and reducing the power consumption.

The double-faced pressure-sensitive adhesive tape or sheet of the present invention includes pressure-sensitive adhesive layers disposed on both surfaces of a base material, and is used for fixing a liquid crystal display module unit and a backlight unit. In the double-faced pressure-sensitive adhesive tape or sheet of the present invention, one pressure-sensitive adhesive layer disposed on one surface of the base material is a pressure-sensitive adhesive layer (A) to be described later, and another pressure-sensitive adhesive layer disposed on the other surface of the base material is a pressure-sensitive adhesive layer (B) to be described later. In particular, the double-faced pressure-sensitive adhesive tape or sheet of the present invention is preferably employed as a double-faced pressure-sensitive adhesive tape or sheet having a light-reflective property and/or a light-shielding property.

In the following, the double-faced pressure-sensitive adhesive tape or sheet of the present invention will be described principally about a case where the double-faced pressure-sensitive adhesive tape or sheet of the present invention is a double-faced pressure-sensitive adhesive tape or sheet having a light-reflective property and/or a light-shielding property (light-reflective/shielding double-faced pressure-sensitive adhesive tape or sheet).

The light-reflective/shielding double-faced pressure-sensitive adhesive tape or sheet (double-faced pressure-sensitive adhesive tape or sheet having a light-reflective property and/or a light-shielding property) of the present invention includes pressure-sensitive adhesive layers disposed on both surfaces of a base material, has a reflectance of 60% or higher and/or a transmittance of 0.3% or lower on at least one surface thereof, and is used for fixing a liquid crystal display module unit and a backlight unit. Further, in the light-reflective/shielding double-faced pressure-sensitive adhesive tape or sheet of the present invention, one of the pressure-sensitive adhesive layers on one surface of the base material is a pressure-sensitive adhesive layer (A) to be described later, and another one of the pressure-sensitive adhesive layers on the other surface of the base material is a pressure-sensitive adhesive layer (B) to be described later.

According to the invention, the pressure-sensitive adhesive layer (A) is a pressure-sensitive adhesive layer which includes a pressure-sensitive adhesive composition containing an acrylic polymer (A1), and, with respect to 100 parts by weight thereof silicone rubber fine particles (A2) in a proportion of from 3 to 50 parts by weight, and it is to be used so as to adhere to the liquid crystal display module unit.

According to the invention, the pressure-sensitive adhesive layer (B) is a pressure-sensitive adhesive layer which includes a pressure-sensitive adhesive composition containing an acrylic polymer (B1), and, with respect to 100 parts by weight thereof, a low-molecular weight polymer component (B2) in a proportion of from 5 to 35 parts by weight, which contains, as a principal monomer component, an ethylenic unsaturated monomer having a glass transition temperature of from 60 to 190°C when it is formed into a homopolymer and having a cyclic structure within the molecule thereof, and which has a weight-average molecular weight equal to or higher than 3,000 but lower than 20,000, and it is to be used so as to adhere to the backlight.

Thus, in the light-reflective/shielding double-faced pressure-sensitive adhesive tape or sheet of the present invention, since the pressure-sensitive adhesive layer (A) to be adhered to the liquid crystal display module unit side includes a pressure-sensitive adhesive composition containing an acrylic polymer (A1), and, with respect to 100 parts by weight thereof, silicone rubber fine particles (A2) in a proportion of from 3 to 50 parts by weight, it can exhibit an excellent dropping impact resistance probably because the silicone rubber fine particles (A2) absorb the impact at the dropping, and it can effectively support the liquid crystal display module unit. Further, since the pressure-sensitive adhesive layer (B) to be adhered to the backlight side includes a pressure-sensitive adhesive composition containing an acrylic polymer (B1), and, with respect to 100 parts by weight thereof, a low-molecular weight polymer component (B2) in a proportion of from 5 to 35 parts by weight, which contains, as a principal monomer component, an ethylenic unsaturated monomer having a glass transition temperature of from 60 to 190°C when it is formed into a homopolymer and having a cyclic structure within the molecule thereof, and which has a weight-average molecular weight equal to or higher than 3,000 but lower than 20,000, it can exhibit, when adhered to the polycarbonate substrate, an excellent repulsion resistance, thereby effectively suppressing or preventing a peeling or a stretching.

In the present invention, in the case that the light-reflective/shielding double-faced pressure-sensitive adhesive tape or sheet has a property having a reflectance of 60% or higher on at least one surface thereof, the reflectance of the surface having a reflectance of 60% or higher is not particularly restricted so long as it is 60% or higher (for example from 60 to 100%), but the higher the more preferable. In the light-reflective/shielding double-faced pressure-sensitive adhesive tape or sheet, the reflectance of the surface having a reflectance of 60% or higher is preferably 70% or higher and more preferably 80% or higher. In the case that the light-reflective/shielding double-faced pressure-sensitive adhesive tape or sheet has a property having a reflectance of 60% or higher on both surfaces, the reflectances of the surfaces may be same or different each other.

In the light-reflective/shielding double-faced pressure-sensitive adhesive tape or sheet, the reflectance (diffuse reflectance) of a predetermined surface can be determined, utilizing a spectrophotometer MPS-2000 manufactured by Shimadzu Corp., by irradiating a surface (predetermined surface side) of the light-reflective/shielding double-faced pressure-sensitive adhesive tape or sheet with a light of a wavelength of 550 nm and measuring an intensity of a light reflected from the irradiated surface.

Further, in the case that the light-reflective/shielding double-faced pressure-sensitive adhesive tape or sheet has a property having a transmittance of 0.3% or lower, the transmittance of the light-reflective/shielding double-faced pressure-sensitive adhesive tape or sheet is not particularly restricted so long as it is 0.3% or lower (from 0 to 0.3%), but the lower the more preferable. In the light-reflective/shielding double-faced pressure-sensitive adhesive tape or sheet, the transmittance is preferably 0.1% or lower, more preferably 0.05% or lower, further preferably 0.03% or lower and particularly preferably 0.01% or lower.

The transmittance of the light-reflective/shielding double-faced pressure-sensitive adhesive tape or sheet can be determined, with a spectrophotometer U4100 manufactured by Hitachi Ltd., by irradiating a surface of the light-reflective/shielding double-faced pressure-sensitive adhesive tape or sheet with a light of a wavelength of 550 nm, and measuring an intensity of a light transmitted to the other surface.

Each of the pressure-sensitive adhesive layer (A) and the pressure-sensitive adhesive layer (B) may be a transparent pressure-sensitive adhesive layer, a pressure-sensitive adhesive layer having a light-shielding property (light-shielding pressure-sensitive adhesive layer) or a pressure-sensitive adhesive layer having a light-reflective property (light-reflective pressure-sensitive adhesive layer), In the case that each pressure-sensitive adhesive layer is a black-color layer as a light-shielding layer (light-shielding pressure-sensitive adhesive layer), or a white-color layer or a silver-color layer as a reflective layer (light-reflective pressure-sensitive adhesive layer), it may contain a colorant (for example a black colorant, a white colorant or a silver colorant), corresponding to the represented color. More specifically, for example, a light-shielding pressure-sensitive adhesive layer may contain a black colorant. Such black colorant may be suitably selected among the black colorants described as examples for the light-shielding layer below. Further, for example, a light-reflective pressure-sensitive adhesive layer may contain a white colorant or a silver colorant, and such white colorant or silver colorant may be suitably selected among the white colorants and silver colorants described as examples for the reflective layer below.

In the case that each of the pressure-sensitive adhesive layer (A) and the pressure-sensitive adhesive layer (B) pressure-sensitive adhesive layer is not a black-color layer as a light-shielding layer (light-shielding pressure-sensitive adhesive layer) nor a white-color layer or a silver-color layer as a light-reflective layer (light-reflective pressure-sensitive adhesive layer), a pressure-sensitive adhesive layer having a transparency (also called "transparent pressure-sensitive adhesive layer") may be employed advantageously.

As the light-reflective/shielding double-faced pressure-sensitive adhesive tape or sheet of the present invention is employed in fixing a liquid crystal display module unit and a backlight unit in electronic equipment such as so-called mobile phones and the like, each of the pressure-sensitive adhesive layer (A) and the pressure-sensitive adhesive layer (B) is preferably electrically non-conductive, for the purpose of suppressing or preventing electrical damages to the electronic equipment. For this reason, the colorant to be contained in the pressure-sensitive adhesive layer is preferably electrically non-conductive. As the colorant electrically non-conductive, non-conductive one can be suitably selected among various colorants described as examples for the reflective layer and the light-shielding layer below. For example, a pressure-sensitive adhesive layer having a non-conductive property and a light-shielding property can be formed by not employing a black colorant having an electrical conductivity such as carbon black but by employing a black colorant, formed by a mixture of a cyan colorant, a magenta colorant and a yellow colorant.

Pressure-sensitive adhesive layer (A)

The pressure-sensitive adhesive layer (A) includes, as described above, a pressure-sensitive adhesive composition containing an acrylic polymer (A1), and, with respect to 100 parts by weight the acrylic polymer (A1), silicone rubber fine particles (A2) in a proportion of from 3 to 50 parts by weight. The acrylic polymer (A1) can be a (meth)acrylic acid ester type polymer containing a (meth)acrylic acid ester (acrylic acid ester or methacrylic acid ester) as a principal monomer component. Examples of such (meth)aerylic acid ester include not only (meth)acrylic acid alkyl esters shown below but also (meth)acrylic acid cycloalkyl esters such as cyclohexyl (meth)acrylate and (meth)acrylic acid aryl esters such as phenyl (meth)acrylate. The (meth)acrylic acid ester as the principal monomer component may be employed singly or in a combination of two or more kinds.

In the acrylic polymer (A1), a (meth)acrylic acid alkyl ester can be employed advantageously as the (meth) acrylic acid ester constituting the principal monomer component. Thus, as the acrylic polymer (A1), a (meth)acrylic acid alkyl ester type polymer, employing a (meth)acrylic acid alkyl ester as the principal monomer component, can be employed advantageously.

The acrylic polymer (A1) preferably employs a (meth)acrylic acid alkyl ester, containing 6 to 12 carbon atoms in the alkyl group thereof, as the principal monomer component, and examples of such (meth)acrylic acid alkyl ester containing 6 to 12 carbon atoms in the alkyl group thereof include hexyl (meth)acrylate, heptyl (meth)acrylate, octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, and dodecyl (meth)acrylate. As the (xneth)acrylic acid alkyl ester containing 6 to 12 carbon atoms in the alkyl group thereof, 2-ethylhexyl (meth)acrylate may be employed particularly advantageously. The (meth)acrylic acid alkyl ester containing 6 to 12 carbon atoms in the alkyl group thereof may be employed singly or in a combination of two or more kinds.

In the acrylic polymer (A1), (meth)acrylic acid ester such as (meth)acrylic acid alkyl ester (particularly (meth) acrytic acid alkyl ester containing 6 to 12 carbon atoms in the alkyl group thereof), being employed as the principal monomer component, importantly has a proportion of 50wt% or higher with respect to the total amount of monomers, preferably 80wt% or higher and more preferably 90wt% or higher. Also an upper limit of the proportion of the (meth) acrylic acid ester with respect to the total amount of monomers is not particularly restricted, but is desirably 99wt% or less (preferably 98wt% or less and more preferably 97wt% or less). When the proportion of the (meth)acrylic acid ester (particularly (meth)acrylic acid alkyl ester containing 6 to 12 carbon atoms in the alkyl group thereof) is less than 50wt% with respect to the total amount of monomers, it may be difficult to exhibit the characteristics (such as pressure-sensitive adhesive property) of the acrylic polymer.

The acrylic polymer (A1) may utilize, as a monomer component, a monomer component capable of copolymerization (copolymerizable monomer) with (meth)acrylic acid ester. The copolymerizable monomer may be used for introducing a crosslinking site into the acrylic polymer (A1) or for controlling the cohesive power of the acrylic polymer (A1). The copolymerizable monomer may be employed singly or in a combination of two or more kinds.

More specifically, as the copolymerizable monomer, for the purpose of introducing a crosslinking site into the acrylic polymer (A1), a functional group-containing monomer component (particularly a thermally crosslinking functional group-containing monomer component for introducing a thermal crosslinking site into the acrylic polymer (A1)) can be employed. Such functional group-containing monomer component may be, without particular restriction, any monomer component that can copolymerize with (meth)acrylic acid alkyl ester and that has a functional group providing a crosslinking site, and examples thereof include carboxyl group-containing monomers such as (meth)acrylic acid, itaconic acid, crotonic acid, maleic acid, fumaric acid, and isocrotonic acid, and anhydride thereof (such as maleic anhydride and itaconic anhydride); hydroxyalkyl (meth)acrylates such as 2-hydroxyethyl (meth)acrylate, 2-hydroxypropyl (meth)acrylate and 2-hydroxybutyl (meth)acrylate; hydroxyl group-containing monomers such as vinyl alcohol and allyl alcohol; amide type monomers such as (meth)acrylamide, N,N-dimethyl(meth)acrylamide, N-butyl(meth)acrylamide, N-methylol (meth) acrylamide, N-methylolpropane (meth)acrylamide, N-methoxymethyl (meth)acrylamide, and N-butoxymethyl (meth)acrylamide; amino group-containing monomers such as aminoethyl (meth)acrylate, N,N-dimethylaminoethyl (meth)acrylate, and t-butylaminoethyl, (meth)acrylate; epoxy group-containing monomers such as glycidyl (meth)acrylate, and methylglycidyl (meth)acrylate; cyano group-containing monomers such as acrylonitrile and methacrylonitrile; and monomers having a nitrogen-containing ring, such as N-vinyl-2-pyrrolidone, N-methylvinylpyrrolidone, N-vinylpyridine, N-viztylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam, and N-(meth)acryloylmorpholine. As the functional group-containing monomer, a carboxyl group-containing monomer such as acrylic acid or an acid anhydride thereof can be employed advantageously.

Also as the copolymerizable monomer, another copolymerizable monomer component may be employed for the purpose of controlling the cohesive power of the acrylic polymer (A1). Examples of such another copolymerizable monomer component include vinyl ester type monomers such as vinyl acetate and vinyl propionate; styrene type monomers such as styrene, a substituted styrene (such as α-methyl styrene), and vinyltoluene; olefinic monomers such as ethylene, propylene, isoprene, butadiene and isobutylene; vinyl chloride, and vinylidene chloride; isocyanate group-containing monomers such as 2-(meth)acryloyloxyethyl isocyanate; alkoxy group-containing monomers such as methoxyethyl (meth)acrylate and ethoxyethyl (meth)acrylate; vinyl ether type monomers such as methyl vinyl ether, and ethyl vinyl ether; and polyfunctional monomers such as 1,6-hexanediol di(meth)acrylate, ethylene glycol di(meth)acrylate, diethylene glycol di(meth)acrylate, triethylene glycol di(meth)acrylate, tetraethylene glycol di(meth)acrylate, (poly)ethylene glycol di(meth)acrylate, propylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, glycerin di(meth)acrylate, epoxy acrylate, polyester acrylate, urethane acrylate, divinylbenzene, butyl di(meth)acrylate, and hexyl di(meth)acrylate.

In case of utilizing a (meth)acrylic acid alkyl ester containing 6 to 12 carbon atoms in the alkyl group thereof as the principal monomer component, employable another copolymerizable monomer component can be, for example, a (meth)acrylic acid $C_{1-5}$ alkyl ester such as methyl (meth)acrylate, ethyl (meth)acrylate, propyl (meth)acrylate, isopropyl (meth)acrylate, n-butyl (meth)acrylate, isobutyl (meth)acrylate, see-butyl (meth)acrylate, t-butyl (meth)acrylate, pentyl (meth)acrylate, isopentyl (meth)acrylate, or neopentyl (meth)acrylate; a (meth)acrylic acid $C_{13-20}$ alkyl ester such as tridecyl (meth)acrylate, tetradecyl (meth)acrylate, pentadecyl (meth)actylate, hexadecyl (meth)acrylate, heptadecyl (meth)acrylate, octadecyl (meth)acrylate, nonadecyl (meth)acrylate, or eicosyl (meth)acrylate; a non-aromatic ring-containing (meth)acrylic acid ester for example a (meth)acrylic acid cycloalkyl ester (such as cyclohexyl (meth)acrylate or cyclopentyl di(meth)acrylate), isobornyl (meth)acrylate or bornyl (meth)acrylate; or an aromatic ring-containing (meth) acrylic acid ester such as a (meth)acrylic acid aryl ester (such as phenyl (meth)acrylate), a (meth)acrylic acid aryloxyalkyl ester (such as phenoxyethyl (meth)acrylate), or a (meth)acrylic acid arylalkyl ester (such as benzyl (meth)acrylate).

As the copolymerizable monomer in the acrylic polymer (A1), a carboxyl group-containing monomer is preferable, and acrylic acid is particularly preferable.

In the acrylic polymer (A1), the proportion of the copolymerizable monomer can be suitably selected according to the type of the monomer component, within a range less than 50wt% with respect to the total amount of the monomer components. For example, in the case that the copolymerizable monomer is a carboxyl group-containing monomer (particularly acrylic acid), the carboxyl group-containing monomer (particularly acrylic acid) is employed in an amount of from 3 to 10 parts by weight (preferably from 3 to 8 parts by weight and more preferably from 3 to 6 parts by weight) with respect to 100 parts by weight of all the monomer components.

The acrylic polymer (A1) can be prepared by a conventional or common polymerization method. Examples of the polymerization method for the acrylic polymer (A1) include a solution polymerization, an emulsion polymerization, a block polymerization, and a polymerization under ultraviolet irradiation. In the polymerization of the acrylic polymer (A1), suitable components matching each polymerization method, such as a polymerization initiator, a chain transfer agent, an emulsifier and a solvent, may be suitably selected and used among those already known or commonly used.

A weight-average molecular weight of the acrylic polymer (A1) can be suitably selected within a range of from 700,000 to 2,000,000 (preferably from 800,000 to 1,700,000 and more preferably from 900,000 to 1,400,000). When the weight-average molecular weight of the acrylic polymer (A1) is less than 700,000, a satisfactory pressure-sensitive adhesive property may not be exerted, and when it exceeds 2,000,000, it may cause a difficulty in the coating property, thus either being undesirable.

The weight-average molecular weight of the acrylic polymer (A1) can be controlled by a type and an amount of the polymerization initiator and the chain transfer agent, a temperature and a time of polymerization, and a concentration and an addition speed of the monomer.

In the invention, the weight-average molecular weight of the acrylic polymer (A1) was measured under following measuring conditions:

apparatus used: HLC-8120GPC, manufactured by Tosoh Corp.
column: TSK gel Super HZM-H/HZ4000/HZ3000/HZ2000, manufactured by Tosoh Corp.
pressure at inlet: 7.2 MPa
column size: 6.0 mm$\phi$ x 15 cm each, 60 cm in total
column temperature: 40°C
eluting liquid: tetrahydrofuran (THF)
flow rate: flow speed 0.6 mL/min
sample concentration: 0.1wt% (tetrahydrofuran solution)
sample injection amount: 20 μL
detector: differential refractometer (RI)
standard sample: polystyrene (PS)
data processing apparatus: GPC-8020, manufactured by Tosoh Corp.

The silicone rubber fine particles (A2) are a silicone rubber elastomer formed as fine particles, and may be, without particular restriction, rubber-like fine particles (powder) formed by a silicone composition containing a silicone component. The silicone composition for forming the silicone rubber fine particles (A2) is not particularly restricted, and examples thereof include (1) an addition reaction-curable silicone composition containing an organopolysiloxane having two or more alkenyl groups within a molecule thereof, an organopolysiloxane having two or more hydrogen atoms, each bonded to silicon atom, within a molecule thereof, and a hydrosilylation reaction catalyst, (2) a condensation reaction-curable silicone composition containing an organopolysiloxane having two or more silicon atoms, each having a hydrolysable functional group, within a molecule thereof, a silane crosslinking agent having three or more silicon atoms, each having a hydrolysable functional group, within a molecule thereof, and a condensation reaction catalyst, and (3) an organic peroxide-curable silicone composition containing an organopolysiloxane having one or more alkenyl groups within a molecule thereof and an organic peroxide-type catalyst.

In case of the addition reaction-curable silicone composition, the alkenyl group, in organopolysisloxane having two or more alkenyl groups within the molecule thereof, can for example be a vinyl group or an allyl group, particularly preferably a vinyl group. Such alkenyl group is bonded directly or indirectly to a silicon atom. Further, the silicon atom in organopolysisloxane having two or more alkenyl groups within the molecule thereof may have, in addition to hydrogen atom, an organic group for example an alkyl group such as a methyl group, an ethyl group, a propyl group, an isopropyl group, or an n-butyl group; a cycloalkyl group such as a cyclohexyl group; an aryl group such as a phenyl group; or an aralkyl group such as a benzyl group or a phenethyl group (particularly a methyl group).

In case of the addition reaction-curable silicone composition, and in organopolysisloxane having two or more hydrogen atoms each bonded to a silicon atom within the molecule thereof, the silicon atom has a hydrogen atom bonded thereto and may have, in addition to the hydrogen atom, an organic group for example an alkyl group such as a methyl group, an ethyl group, a propyl group, an isopropyl group, or an n-butyl group; a cycloalkyl group such as a cyclohexyl group; an aryl group such as a phenyl group; or an aralkyl group such as a benzyl group or a phenethyl group (particularly a methyl group).

In case of the addition reaction-curable silicone composition, each of the organopolysisloxane having two or more alkenyl groups within a molecule thereof and the organopolysisloxane having two or more hydrogen atoms each bonded to a silicon atom within a molecule thereof may have any of a linear form, a branched form and a cyclic form. Each of the organopolysisloxane having two or more alkenyl groups within a molecule thereof and the organopolysisloxane having two or more hydrogen atoms each bonded to a silicon atom within a molecule thereof may be employed singly or in a combination of two or more kinds.

In case of the addition reaction-curable silicone composition, the hydrosilylation reaction catalyst may be, without particular restriction, any catalyst capable of promoting a hydrosilylation reaction of the organopolysisloxane having two or more alkenyl groups within a molecule thereof and the organopolysisloxane having two or more hydrogen atoms each bonded to a silicon atom within a molecule thereof, and platinum-based catalysts may be advantageously employed, such as a platinum olefin complex, a platinum alkenylsiloxane complex, chloroplatinic acid, platinum black, and a silica component carrying a platinum-based compound on the surface thereof The hydrosilylation reaction catalyst may be employed singly or in a combination of two or more kinds. The amount of the hydrosilylation reaction catalyst is not particularly restricted so long as it is an amount usable as a catalyst.

In case of the condensation reaction-curable silicone composition and in the organopolysiloxane having two or more silicon atoms, each having a hydrolysable functional group, within a molecule thereof, the hydrolysable functional group may be a hydroxyl group or an alkoxy group (such as a methoxy group, an ethoxy group, a propoxy group, an isopropoxy group or a butyloxy group). On the other hand, in the silane crosslinking agent having three or more silicon atoms each having a hydrolysable functional group within a molecule thereof, the hydrolysable functional group is advantageously an alkoxy group (such as a methoxy group, an ethoxy group, a propoxy group, an isopropoxy group or a butyloxy group). In the organopolysiloxane having two or more silicon atoms, each having a hydrolysable functional group within a molecule thereof, or in the silane crosslinking agent having three or more silicon atoms, each having a hydrolysable functional group within a molecule thereof, the silicon atom may have, in addition to the hydrogen atom, an organic group for example an alkyl group such as a methyl group, an ethyl group, a propyl group, an isopropyl group, or an n-butyl group; a cycloalkyl group such as a cyclohexyl group; an aryl group such as a phenyl group; or an aralkyl group such as a benzyl group or a phenethyl group (particularly a methyl goup). The condensation reaction catalyst can be, for example, an organic tin compound or an organic titanium compound. Each of the organopolysiloxane having two or more silicon atoms, each having a hydrolysable functional group, within a molecule thereof and the condensation reaction catalyst may be employed singly or in a combination of two or more kinds.

Further, in case of the organic peroxide-curable silicone composition and in the organopolysiloxane having one or more alkenyl groups within a molecule thereof, the alkenyl group may be a vinyl group or an allyl group, as described above. In the organopolysiloxane having one or more alkenyl groups within a molecule thereof, the silicon atom may have, in addition to the hydrogen atom, an organic group for example an alkyl group such as a methyl group, an ethyl group, a propyl group, an isopropyl group, or an n-butyl group; a cycloalkyl group such as a cyclohexyl group; an aryl group such as a phenyl group; or an aralkyl group such as a benzyl group or a phenethyl group (particularly a methyl group). Each of organopolysiloxane having one or more alkenyl groups within a molecule thereof and organic peroxide-type catalyst may be employed singly or in a combination of two or more kinds.

The curable silicone composition may further contain various additives, for example, a filler such as an inorganic filler, an addition reaction inhibitor, an organic oil component, an alkenyl group-containing organic compound, an epoxy group-containing organic compound, a non-reactive silicone oil component, and a silicone resin component.

The silicone rubber fine particles (A2) may be produced by a conventional method for preparing fine particles. The producing method for silicone rubber fine particles (A2) may be, for example, a power forming (pulverizing) method by crushing a cured substance of various curable silicone compositions (for example an addition reaction-curable silicone composition, a condensation reaction-curable silicone composition and an organic peroxide-curable silicone composition), or a method of curing a curable silicone composition in a sprayed state, but advantageous is a method of curing a curable silicone composition in a state dispersed in water, utilizing an emulsifier or a surfactant according to the necessity.

More specifically, silicone rubber fine particles (A2) may be prepared by finely dispersing (emulsifying) a curable silicone composition, containing a silicone oil component, in water, then crosslinking or curing the silicone oil component in the state dispersed in water thereby obtaining rubber-like particles, and eliminating water. In such process, in the case that the curable silicone composition is an addition reaction-curable silicone composition, the silicone oil component can be crosslinked or cured by a hydrosilylation reaction. For example, in the case that the curable silicone composition is an addition reaction-curable silicone composition, the silicone oil component may be an organopolysiloxane having two or more alkenyl groups within a molecule thereof or an organopolysiloxane having two or more hydrogen atoms each bonded to a silicon atom, within a molecule thereof. Also in the case that the curable silicone composition is a condensation reaction-curable silicone composition, the silicone oil component may be organopolysiloxane having two or more silicon atoms each having a hydrolysable functional group, within a molecule thereof, or a silane crosslinking agent having three or more silicon atoms each having a hydrolysable functional group, within a molecule thereof.

The silicone rubber fine particles (A2) are preferably fine particles (powder) formed by a silicone rubber component having a JIS A hardness, defined by JIS K 6253-1997, of from 10 to 95.

The silicone rubber fine particles (A2) may be subjected to a conventional or common surface treatment (for example a coating by a surface treating agent).

The shape of the silicone rubber fine particles (A2) may be any of a spherical shape, a ball shape, a flattened ball shape, and an amorphous shape, but is preferably a spherical shape or a ball shape (particularly a spherical shape).

The average particle size of the silicone rubber fine particles (A2) may be suitably selected, for example, within a range of from 0.5 to 100 $\mu$m (preferably from 1 to 10 $\mu$m).

For such silicone rubber fine particles (A2), commercial products such as Torayfill E-500 (trade name) or Torayfill E-600 (trade name) (both being manufactured by Toray-Dow Corning Co.) may be employed.

In the present invention, it is important that the silicone rubber fine particles (A2) are employed in a proportion of from 3 to 50 parts by weight, with respect to 100 parts by weight of the acrylic polymer (A1). The proportion of the silicone rubber fine particles (A2) is preferably from 3 to 30 parts by weight with respect to 100 parts by weight of the acrylic polymer (A1), and particularly preferably from 4 to 20 parts by weight. When the amount of the silicone rubber fine particles (A2) is less than 3 parts by weight with respect to 100 parts by weight of the acrylic polymer (A1), a sufficient dropping impact resistance cannot be obtained, and when the amount exceeds 50 parts by weight, the adhesive property is deteriorated, thus either case being undesirable.

The pressure-sensitive adhesive composition for forming the pressure-sensitive adhesive layer (A) may contain various additives, so long as the acrylic polymer (A1) and the silicone rubber fine particles (A2) are contained in such a proportion that the silicone rubber fine particles (A2) represent 3 to 50 parts by weight with respect to 100 parts by weight of the acrylic polymer (A1). Such additives may be suitably selected from already known additives such as a crosslinking agent, a cross bonding agent, a pressure-sensitive adhesive property providing resin, a filler, a flame retardant, an antiaging agent, an antistatic, a softener, an ultraviolet absorber, an antioxidant, a plasticizer, and a surfactant.

Particularly in the invention, a crosslinking agent is preferably employed in consideration of repulsion resistance. The amount of the crosslinking agent is not particularly restricted and may be suitably selected according to a crosslinking density desired in the pressure-sensitive adhesive layer (A), a type of the crosslinking agent, and a type (composition and weight-average molecular weight) of the acrylic polymer (A1), and is importantly such an amount that the pressure-sensitive adhesive layer (A) can exhibit an excellent repulsion resistance. More specifically, the amount of the crosslinking agent can be selected for example within a range of from 0.01 to 20 parts by weight (preferably from 0.02 to 10 parts by weight) with respect to 100 parts by weight of the acrylic polymer (A1).

The crosslinking agent is not particularly restricted, and may be suitably selected from known crosslinking agents, and examples thereof include an isocyanate type crosslinking agent, a melamine type crosslinking agent, an epoxy type crosslinking agent, a peroxide type crosslinking agent, an urea type crosslinking agent, a metal alkoxide type crosslinking agent, a metal chelate type crosslinking agent, a metal salt type crosslinking agent, a carbodiimide type crosslinking agent, an oxazoline type crosslinking agent, an aziridine type crosslinking agent, and an amine type crosslinking agent, and an isocyanate type crosslinking agent or an epoxy type crosslinking agent may be employed advantageously. The crosslinking agent may be employed singly or in a combination of two or more lands.

Examples of the isocyanate type crosslinking agent include lower aliphatic polyisocyanates such as 1,2-ethylene diisocyanate, 1,4-butylene diisocyanate and 1,6-hexamethylene diisocyanate; alicyclic polyisocyanates such as cyclopentylene diisocyanate, cyclohexylene diisocyanate, isophorone diisocyanate, hydrogenated tolylene diisocyanate, and hydrogenated xylene diisocyanate; and aromatic polyisocyanates such as 2,4-tolylene diisocyanate, 2,6-tolylene diisocyanate, 4,4'-diphenylmethane diisocyanate, and xylylene diisocyanate; and a trimethylol propane/tolylene diisocyanate trimer addition product [Coronate L (trade name), manufactured by Nippon Polyurethane Industry Co.] and a trimethylol propane/hexamethylene diisocyanate trimer addition product [Coronate HL (trade name), manufactured by Nippon Polyurethane Industry Co.] are also usable.

Also examples of the epoxy type crosslinking agent include N,N,N',N'-tetraglycidyl-m-xylenediamine, diglycidylaniline, 1,3-bit(N,N-glycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipic acid diglycidyl ester, o-phthatic acid diglycidyl ester, triglycidyl-tris(2-hydroxyethyl) isocyanurate, resorcin diglycidyl ether, bisphenol-S-diglycidyl ether, and epoxy resins containing two or more epoxy groups within the molecule thereof.

In the invention, the pressure-sensitive adhesive layer (A) may be formed by a crosslinking process by an irradiation with an electron beam or ultraviolet light, in place for or in addition to the use of crosslinking agent.

Thus, the crosslinking process allows to control the gel fraction of the pressure-sensitive adhesive layer (A). In the invention, it is preferable that the pressure-sensitive adhesive layer (A) has a gel fraction of 51wt% or higher, more preferably from 51 to 70wt% (particularly from 53 to 65wt%). When the gel fraction of the pressure-sensitive adhesive layer (A) is less than 51wt%, it is difficult to obtain the desired cohesive power, thus reducing the repulsion resistance. When the gel fraction is higher than 70wt%, a sufficient cohesive power can be provided but the adhesive property is deteriorated, thus possibly resulting in an insufficient repulsion resistance.

The gel fraction means a value calculated by the following "gel fraction measuring method".

(Gel fraction measuring method)

A pressure-sensitive adhesive composition is coated on a releasable liner and dried or cured to form a pressure-sensitive adhesive layer. About 0.1 g of such pressure-sensitive adhesive layer are wrapped in a tetrafluoroethylene sheet of 0.2 $\mu$m (NTF1122 (trade name), manufactured by Nitto Denko Corp.) and bound with a string, and the weight of the wrap is measured as a weight before immersion. The weight before immersion is a total weight of the pressure-sensitive adhesive layer, the tetrafluoroethylene sheet and the string. Also the weight of the tetrafluoroethylene sheet and the string is also measured as a weight of the wrapping.

Then the pressure-sensitive adhesive layer, wrapped in the tetrafluoroethylene sheet and bound with the string, is immersed in a 50-ml container filled with ethyl acetate, and is let to stand for one week (7 days) at the room temperature. Thereafter, the tetrafluoroethylene sheet is taken out from the container and dried at 130°C for 2 hours in a dryer to eliminate ethyl acetate, and the weight of the sample is measured as a weight after immersion.

Then the gel fraction is calculated according to the following formula:

$$\text{gel fraction (wt\%)} = (A - B)/(C - B) \times 100 \qquad (1)$$

wherein A indicates the weight after immersion, B indicates the weight of wrapping and C indicates the weight before immersion.

In the invention, the pressure-sensitive adhesive composition for forming the pressure-sensitive adhesive layer (A) may contain a pressure-sensitive adhesive property providing resin or a low-molecular weight polymer component. For such low-molecular weight polymer component, a low-molecular weight polymer component (B2) employed in the pressure-sensitive adhesive layer (B) may be utilized. In the pressure-sensitive adhesive composition for forming the pressure-sensitive adhesive layer (A), an amount of the low-molecular weight polymer component is not particularly restricted, but may be selected within a range from 0 to 25 parts by weight (preferably from 0 to 15 parts by weight and more preferably from 0 to 5 parts by weight), with respect to 100 parts by weight of the acrylic polymer (A1).

In the present invention, in the case that the pressure-sensitive adhesive composition for forming the pressure-sensitive adhesive layer (A) contains a pressure-sensitive adhesive property providing resin or a low-molecular weight polymer component, the repulsion resistance can be improved but the dropping impact resistance may be deteriorated, so that it is more preferable to increase the amount of the silicone rubber fine particles (A2). On the other hand, in the case that the pressure-sensitive adhesive composition for forming the pressure-sensitive adhesive layer (A) does not contain a pressure-sensitive adhesive property providing resin nor a low-molecular weight polymer component, an excellent dropping impact resistance can be exhibited even with a low amount of the silicone rubber fine particles (A2).

Such pressure-sensitive adhesive composition may be employed singly or in a combination of two or more kinds. Further, the pressure-sensitive adhesive composition may be a pressure-sensitive adhesive of any form, such as an emulsion type pressure-sensitive adhesive, a solvent type pressure-sensitive adhesive or a heat fusible (hot-melt) type pressure-sensitive adhesive.

The pressure-sensitive adhesive layer (A) may have either form of a single layer structure and a laminated structure. The thickness (thickness after drying or curing) of the pressure-sensitive adhesive layer (A) may be suitably selected, for example, within a range of from 4 to 100 $\mu$m (preferably from 4 to 50 $\mu$m and more preferably from 10 to 40 $\mu$m).

The pressure-sensitive adhesive layer (A) is not restricted in the forming method therefor, and may be formed, for example, by a method of coating a pressure-sensitive adhesive composition on a predetermined surface, followed by an optional drying or a curing, or a method of coating a pressure-sensitive adhesive composition on a separator (releasable liner), followed by an optional drying or a curing to obtain a pressure-sensitive adhesive layer, and transferring such pressure-sensitive adhesive layer by adhering onto a predetermined surface. For coating the pressure-sensitive adhesive composition, a common coating equipment (such as a gravure roll coater, a reverse roll coater, a kiss roll coater, a dip roll coater, a bar coater, a knife coater or a spray coater) can be used.

Pressure-sensitive adhesive layer (B)

The pressure-sensitive adhesive layer (B) includes, as described above, a pressure-sensitive adhesive composition containing an acrylic polymer (B1), and, with respect to 100 parts by weight the acrylic polymer (B 1), a low-molecular weight polymer component (B2) in a proportion of from 5 to 35 parts by weight, which contains, as a principal monomer component, an ethylenic unsaturated monomer having a glass transition temperature of from 60 to 190°C when it is formed into a homopolymer and having a cyclic structure within the molecule thereof, and which has a weight-average molecular weight equal to or higher than 3,000 but lower than 20,000. The acrylic polymer (B1) can be, as in the case of the acrylic polymer (A1), a (meth)acrylic acid ester type polymer containing a (meth)acrylic acid ester (acrylic acid ester or methacrylic acid ester) as a principal monomer component. Examples of such (meth)acrylic acid ester include, as in the case of acrylic polymer (A1), not only (meth)acrylic acid alkyl esters but also (meth)acrylic acid cycloalkyl esters such as cyclohexyl (meth)acrylate and (meth)acrylic acid aryl esters such as phenyl (meth)acrylate. The (meth) acrylic acid ester as the principal monomer component may be employed singly or in a combination of two or more kinds.

In the acrylic polymer (B1), a (meth)acrylic acid alkyl ester can be employed advantageously as the (meth) acrylic acid ester constituting the principal monomer component, as in the case of the acrylic polymer (A1). Thus, as the acrylic polymer (B1), a (meth)acrylic acid alkyl ester type polymer, employing a (meth)acrylic acid alkyl ester as the principal monomer component, can be employed advantageously.

The acrylic polymer (B1) preferably employs a (meth)acrylic acid alkyl ester, containing 4 to 12 carbon atoms in the alkyl group thereof, as the principal monomer component, and examples of such (meth)acrylic acid alkyl ester containing 4 to 12 carbon atoms in the alkyl group include n-butyl (meth)acrylate, isobutyl (meth)acrylate, sec-butyl (meth)acrylate, t-butyl (meth)acrylate, pentyl (meth)acrylate, isopentyl (meth)acrylate, neopentyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, and dodecyl (meth)acrylate. As the (meth)acrylic acid alkyl ester containing 4 to 12 carbon atoms in the alkyl group thereof, n-butyl (meth)acrylate or 2-ethylhexyl (meth)acrylate may be employed advantageously. The (meth)acrylic acid alkyl ester containing 4 to 12 carbon atoms in the alkyl group thereof may be employed singly or in a combination of two or more kinds.

In the acrylic polymer (B1), (meth)acrylic acid ester such as (meth)acrylic acid alkyl ester (particularly (meth) acrylic acid alkyl ester containing 4 to 12 carbon atoms in the alkyl group thereof), being employed as the principal monomer component, importantly has a proportion of 50wt% or higher with respect to the total amount of monomers, preferably 80wt% or higher and more preferably 90wt% or higher. Also an upper limit of the proportion of the (meth) acrylic acid ester with respect to the total amount of monomers is not particularly restricted, but is desirably 99wt% or less (preferably 98wt% or less and more preferably 97wt% or less). When the proportion of the (meth)acrylic acid ester (particularly (meth)acrylic acid alkyl ester containing 4 to 12 carbon atoms in the alkyl group thereof) is less than 5Owt% with respect to the total amount of monomers. it may be difficult to exhibit the characteristics (such as pressure-sensitive adhesive property) of the acrylic polymer.

The acrylic polymer (B1) may utilize, as a monomer component, a monomer component capable of copolymerization (copolymerizable monomer) with (meth)acrylic acid ester. The copolymerizable monomer may be used for introducing a crosslinking site into the acrylic polymer (B1) or for controlling the cohesive power of the acrylic polymer (B1). The copolymerizable monomer may be employed singly or in a combination of two or more kinds.

More specifically, as the copolymerizable monomer, for the purpose of introducing a crosslinking site into the acrylic polymer (B1), a functional group-containing monomer component (particularly a thermally crosslinking functional group-containing monomer component for introducing a thermal crosslinking site into the acrylic polymer (B1)) can be employed. Examples of such functional group-containing monomer component include those described as examples for the acrylic polymer (A1) (such as carboxyl group-containing monomers and anhydrides thereof, hydroxyl group-containing monomers, amino group-containing monomers, epoxy group-containing monomers, cyano group-containing monomers and monomers having a nitrogen-containing ring). For the functional group-containing monomer, as in the case of the acrylic polymer (A1), a carboxyl group-containing monomer such as acrylic acid or an acid anhydride thereof can be employed advantageously.

In the acrylic polymer (B1), the proportion of the copolymerizable monomer can be suitably selected according to the type of the monomer component, within a range less than 50wt% with respect to the total amount of the monomer components. For example, in the case that the copolymerizable monomer is a carboxyl group-containing monomer (particularly acrylic acid), the carboxyl group-containing monomer (particularly acrylic acid) is employed in an amount of from 3 to 10 parts by weight (preferably from 3 to 8 parts by weight and more preferably from 3 to 6 parts by weight) with respect to 100 parts by weight of all the monomer components.

Further, as the copolymerizable monomer, another copolymerizable monomer component may be employed for the purpose of controlling the cohesive power of the acrylic polymer (B1). Examples of such another copolymerizable monomer component include those described as examples for the acrylic polymer (A1) (such as vinyl ester type monomers, styrene type monomers, olefinic monomers, vinyl chloride, vinylidene chloride, isocyanate group-containing monomers, alkoxyl group-containing monomers, vinyl ether type monomers and polyfunctional monomers).

In case of utilizing a (meth)acrylic acid alkyl ester containing 4 to 12 carbon atoms in the alkyl group thereof as the principal monomer component, employable another copolymerizable monomer component can be, for example, a (meth)acrylic acid $C_{1-3}$ alkyl ester such as methyl (meth)acrylate, ethyl (meth)acrylate, propyl (meth)acrylate or isopropyl (meth)acrylate; a (meth)acrylic acid $C_{13-20}$ alkyl ester such as tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, or eicosyl (meth)acrylate; a non-aromatic ring-containing (meth)acrylic acid ester such as a (meth)acrylic acid cycloalkyl ester (such as cyclohexyl (meth)acrylate or cyclopentyl (meth)acrylate), isobornyl (meth)acrylate or bornyl (meth)acrylate; or an aromatic ring-containing (meth)acrylic acid ester such as (meth)acrylic acid aryl ester (such as phenyl (meth)acrylate), (meth)acrylic acid aryloxyalkyl ester (such as phenoxyethyl (meth)acrylate), or (meth)acrylic acid arylalkyl ester (such as benzyl (meth)acrylate).

The acrylic polymer (B1) can be prepared by a conventional or common polymerization method. Examples of the polymerization method for the acrylic polymer (B1) include, as in the case of acrylic polymer (A1), a solution polymerization, an emulsion polymerization, a block polymerization, and a polymerization under ultraviolet irradiation. In the polymerization of the acrylic polymer (B1), suitable components matching each polymerization method, such as a polymerization initiator, a chain transfer agent, an emulsifier and a solvent, may be suitably selected and used among those already known or commonly used.

A weight-average molecular weight of the acrylic polymer (B1) can be suitably selected within a range of from 500,000 to 2,000,000 (preferably from 550,000 to 1,700,000 and more preferably from 600,000 to 1,400,000). When the weight-average molecular weight of the acrylic polymer (B1) is less than 500,000, a satisfactory pressure-sensitive adhesive property may not be exerted, and when it exceeds 2,000,000, it may cause a difficulty in the coating property, thus either being undesirable.

The weight-average molecular weight of the acrylic polymer (B 1) can be controlled by a type and an amount of the polymerization initiator and the chain transfer agent, a temperature and a time of polymerization, and a concentration and an addition speed of the monomer.

In the invention, the weight-average molecular weight of the acrylic polymer (B1) was measured under conditions similar to those for the acrylic polymer (A1).

The low-molecular weight polymer component (B2) contains, as a principal monomer component, an ethylenic unsaturated monomer having a glass transition temperature of from 60 to 190°C when it is formed into a homopolymer and having a cyclic structure within the molecule thereof (also called "ring-containing ethylenic unsaturated monomer having Tg of 60-190°C"). In such ring-containing ethylenic unsaturated monomer having Tg of 60-190°C, a glass transition temperature (Tg), when it is formed into a homopolymer, is a value obtained in the following "Tg measuring method".

(Tg measuring method)

In a reaction vessel equipped with a thermometer, an agitator, a nitrogen introducing tube and a reflux condenser, 100 parts by weight of a monomer component (namely ring-containing ethylenic unsaturated monomer having Tg of 60-190°C), 0.2 parts by weight of azobisisobutyronitrile and 200 parts by weight of ethyl acetate as a polymerization solvent are charged, and agitated for 1 hour under a nitrogen gas introduction. After oxygen in the polymerization system is removed in this manner, the mixture is heated to 63°C and reacted for 10 hours. Then it is cooled to the room temperature to obtain a homopolymer solution of a solid concentration of 33wt%. Then the homopolymer solution is cast coated on a releasing liner and dried to obtain a test sample (sheet-shaped homopolymer) of a thickness of about 2 mm. The test sample is then punched into a disc shape of a diameter of 7.9 mm, then sandwiched between parallel plates and is subjected to a viscoelasticity measurement on a viscoelastic tester (trade name ARES, manufactured by Rheometrics Inc.), in a shear mode, under a shearing strain of 1 Hz, within a temperature range of from -70 to 150°C and at a temperature elevating rate of 5°C/min to determine a temperature at a maximum of loss tangent (tanδ), and such temperature at the maximum of loss tangent is taken as the glass transition temperature (Tg).

In the low-molecular weight polymer component (B2), the ring-containing ethylenic unsaturated monomer having Tg of 60-190°C may be, without any particular restriction, any ethylenic unsaturated monomer showing Tg of from 60 to 190°C when it is formed as a homopolymer and having a cyclic structure within the molecule. The ring in such ring-containing ethylenic unsaturated monomer having Tg of 60-190°C may be either one of an aromatic ring and a non-aromatic ring, but a non-aromatic ring is preferred. Examples of the aromatic ring include aromatic hydrocarbon rings (such as a benzene ring and a condensed carbon ring as in naphthalene), and various aromatic heterocycles. Also examples of the non-aromatic ring include non-aromatic alicyclic rings (for example cycloalkane rings such as a cyclopentane ring, a cyclohexane ring, a cycloheptane ring and a cyclooctane ring; or cycloalkene rings such as a cyclohexene ring), non-aromatic bridged rings (for example bridged hydrocarbon rings such as a bicyclic hydrocarbon ring as in pinane, pinene, bornane, norbornane, and norbornene; a tricyclic hydrocarbon ring as in adamantane and a tetracyclic hydrocarbon ring).

For such ring-containing ethylenic unsaturated monomer having Tg of 60-190°C, an ethylenic unsaturated monomer showing a glass transition temperature of 60°C or higher (preferably from 60 to 190°C and more preferably from 63 to 180°C) when it is formed into a homopolymer, may be suitably selected among those having a cyclic structure within the molecule thereof, of which examples include non-aromatic ring-containing (meth)acrylic acid esters, for example (meth)acrylic acid cycloalkyl esters such as cyclohexyl (meth)acrylate, or isobornyl (meth)acrylate; aromatic ring-containing (meth)acrylic acid esters for example (meth)acrylic acid aryl esters such as phenyl (meth)acrylate, (meth)acrylic acid aryloxyalkyl esters such as phenoxyethyl (meth)acrylate, and (meth)acrylic acid arylalkyl esters such as benzyl (meth)acrylate; and styrenic monomers such as styrene or α-methylstyrene. Thus, an ethylenic unsaturated monomer having a cyclic structure, that can form a homopolymer having a glass transition temperature of 60°C or higher (preferably from 60 to 190°C and more preferably from 63 to 180°C), can be utilized.

In the present invention, the ring-containing ethylenic unsaturated monomer having Tg of 60-190°C is preferably a (meth)acrylic acid ester having a non-aromatic ring, such as cyclohexyl (meth)acrylate or isobornyl (meth)acrylate.

The ring-containing ethylenic unsaturated monomer having Tg of 60-190°C as the principal monomer component may be employed singly or in a combination of two or more kinds.

In the low-molecular weight polymer component (B2), the ring-containing ethylenic unsaturated monomer having Tg of 60-190°C, as being employed as the principal monomer component, importantly has a proportion of 50wt% or higher, preferably 80wt% or higher and more preferably 90wt% or higher, with respect to the total amount of monomer components. When the proportion of the ring-containing ethylenic unsaturated monomer having Tg of 60-190°C is less than 50 wt% with respect to the total amount of monomer components, the repulsion resistance and the cohesive power are deteriorated.

In the low-molecular weight polymer component (B2), a monomer component (copolymerizable monomer) capable of copolymerizing with the ring-containing ethylenic unsaturated monomer having Tg of 60-190°C may be employed in combination, according to the necessity. A proportion of such copolymerizable monomer may be suitably selected within a range less than 50 parts by weight with respect to 100 parts by weight of all the monomer components according to the type of the monomer components, but, in order to develop a satisfactory pressure-sensitive adhesive property, is preferably such an amount as to provide a glass transition temperature of 60°C or higher (preferably from 65 to 180°C) in the low-molecular weight polymer component (B2). When the glass transition temperature of the low-molecular weight polymer component (B2) is less than 60°C, the repulsion resistance and the cohesive power are deteriorated.

Such copolymerizable monomer may be employed singly or in a combination of two or more kinds.

In the low-molecular weight polymer component (B2), the copolymerizable monomer can be suitably selected, for example, from various monomer components described as examples for the acrylic polymer (A1) and the acrylic polymer (B1). Specific examples of such copolymerizable monomer include (meth)acrylic acid alkyl esters such as (zneth)acrylic acid alkyl esters containing 1 to 20 carbon atoms; carboxyl group-containing monomers such as (meth) acrylic acid and acid anhydride thereof; hydroxyl group-containing monomers such as 2-hydroxyethyl (meth)acrylate; amide type monomers such as (meth)acrylamide; amino group-containing monomers such as N,N-dimethylaminoethyl (meth)acrylate; epoxy group-containing monomers such as glycidyl (meth)acrylate; cyano group-containing monomers such as acrylonitrile and methacrylonitrile; monomers having a nitrogen-containing ring, such as N-(meth)acryloylmorpholine; vinyl ester type monomers such as vinyl acetate; olefinic monomers such as ethylene, propylene, isoprene, butadiene and isobutylene; vinyl chloride, vinylidene chloride; isocyanate group-containing monomers such as 2-(meth) acryloyloxyethylisocyanate; alkoxy group-containing monomers such as methoxyethyl (meth)acrylate; vinyl ether type monomers such as methyl vinyl ether, and ethyl vinyl ether; and polyfunctional monomers such as 1,6-hexanediol di (meth)acrylate, ethylene glycol di(meth)acrylate, diethylene glycol di(meth)acrylate, triethylene glycol di(meth)acrylate, tetraethylene glycol di(meth)acrylate, (poly)ethylene glycol di(meth)acrylate, propylene glycol di(meth)acrylate, (poly) propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, glycerin di(meth)acrylate, epoxy acrylate, polyester acrylate, urethane acrylate, divinylbenzene, butyl di(meth)acrylate, and hexyl di(meth)acrylate.

As the copolymerizable monomer in the low-molecular weight polymer component (B2), a carboxyl group-containing monomer is preferable, and acrylic acid is particularly preferable.

The low-molecular weight polymer component (B2), like the acrylic polymer (A1) or the acrylic polymer (B1), can be prepared by a conventional or common polymerization method. Examples of the polymerization method for the low-molecular weight polymer component (B2) include a solution polymerization, an emulsion polymerization, a block polymerization, and a polymerization under ultraviolet irradiation. In the polymerization of the low-molecular weight polymer component (B2), suitable components matching each polymerization method, such as a polymerization initiator, a chain transfer agent, an emulsifier and a solvent, may be suitably selected and used among those conventionally or commonly used.

The weight-average molecular weight of the low-molecular weight polymer component (B2) is importantly equal to or higher than 3,000 but less than 20,000, preferably from 3,050 to 15,000 and particularly preferably from 3,100 to 9,900. When the weight-average molecular weight of the low-molecular weight polymer component (B2) is less than 3,000, the repulsion resistance and the cohesive power are deteriorated, and when it is equal to or higher than 20,000, a mutual solubility with the acrylic polymer (B1) as the principal monomer component is deteriorated, thereby deteriorating the repulsion resistance and the cohesive power.

The weight-average molecular weight of the low-molecular weight polymer component (B2) can be controlled, for example, by a type and an amount of the polymerization initiator and the chain transfer agent, a temperature and a time of polymerization, and a concentration and an addition speed of the monomers.

In the invention, the weight-average molecular weight of the low-molecular weight polymer component (B2) was measured under conditions similar to those for the acrylic polymer (A1) and for the acrylic polymer (B1).

In the invention, it is important that the low-molecular weight polymer component (B2) is employed in a proportion of from 5 to 35 parts by weight, with respect to 100 parts by weight of the acrylic polymer (B1). The proportion of the low-molecular weight polymer component (B2), with respect to 100 parts by weight of the acrylic polymer (B1), is preferably from 10 to 33 parts by weight, and particularly preferably from 15 to 30 parts by weight. When the amount of the low-molecular weight polymer component (B2) is less than 5 parts by weight with respect to 100 parts by weight of the acrylic polymer (B1), the repulsion resistance and the cohesive power are deteriorated, while when the amount exceeds 35 parts by weight, the dropping impact resistance is detrimentally affected, thus either case being undesirable.

The pressure-sensitive adhesive composition for forming the pressure-sensitive adhesive layer (B) may contain various additives according to the necessity, so long as the composition contains the acrylic polymer (B1) and the low-molecular weight polymer component (B2) in such a proportion that the low-molecular weight polymer component (B2) is contained in a proportion of from 5 to 35 parts by weight with respect to 100 parts by weight of the acrylic polymer (B1). Such additives may be suitably selected from already known additives such as a crosslinking agent, a cross bonding agent, a pressure-sensitive adhesive property providing resin, a filler, a flame retardant, an antiaging agent, an antistatic, a softener, an ultraviolet absorber, an antioxidant, a plasticizer, and a surfactant.

Particularly, in the invention, a crosslinking agent is preferably employed from the standpoint of repulsion resistance. The amount of the crosslinking agent is not particularly restricted and may be suitably selected according to a crosslinking density desired in the pressure-sensitive adhesive layer (B), a type of the crosslinking agent, and a type (composition and weight-average molecular weight) of the acrylic polymer (B1), and is importantly such an amount that the pressure-sensitive adhesive layer (B) can exhibit an excellent repulsion resistance. More specifically, the amount of the crosslinking agent can be selected, for example, within a range of from 0.01 to 20 parts by weight (preferably from 0.02 to 10 parts by weight) with respect to 100 parts by weight of the acrylic polymer (B 1).

The crosslinking agent is not particularly restricted, and may be suitably selected from known crosslinking agents, and examples include an isocyanate type crosslinking agent, a melamine type crosslinking agent, an epoxy type crosslinking agent, a peroxide type crosslinking agent, an urea type crosslinking agent, a metal alkoxide type crosslinking agent, a metal chelate type crosslinking agent, a metal salt type crosslinking agent, a carbodiimide type crosslinking agent, an oxazoline type crosslinking agent, an aziridine type crosslinking agent, and an amine type crosslinking agent, and an isocyanate type crosslinking agent or an epoxy type crosslinking agent may be employed advantageously. The crosslinking agent may be employed singly or in a combination of two or more kinds.

Examples of the isocyanate type crosslinking agent and the epoxy type crosslinking agent include those described as examples of the isocyanate type crosslinking agent and the epoxy type crosslinking agent for the pressure-sensitive adhesive layer (A).

In the invention, the pressure-sensitive adhesive layer (B) may be formed by a crosslinking process by an irradiation with an electron beam or ultraviolet light, in place for or in addition to the use of crosslinking agent.

Thus, the crosslinking process allows to control the gel fraction of the pressure-sensitive adhesive layer (B). In the invention, it is preferable that the pressure-sensitive adhesive layer (B) has a gel fraction of 51 wt% or higher, and more preferably from 51 to 70wt% (particularly from 53 to 68wt%). When the gel fraction of the pressure-sensitive adhesive layer (B) is lower than 51wt%, it is difficult to obtain the desire cohesive power and lowers the repulsion resistance, while when the gel fraction exceeds 70 wt%, a sufficient cohesive power can be obtained but the pressure-sensitive adhesive power is deteriorated, thereby resulting in an insufficient repulsion resistance.

The gel fraction means a value obtained the "gel fraction measuring method" same as in the pressure-sensitive adhesive layer (A).

In the invention, the pressure-sensitive adhesive composition for forming the pressure-sensitive adhesive layer (B) may further contain silicone rubber fine particles. Such silicone rubber fine particles may be the silicone rubber fine particles (A2) employed in the pressure-sensitive adhesive layer (A). In the pressure-sensitive adhesive composition for forming the pressure-sensitive adhesive layer (B), the amount of the silicone rubber fine particles is not particularly restricted, but, as in the case of the silicone rubber fine particles (A2) in the pressure-sensitive adhesive layer (A), is within a range of from 3 to 50 parts by weight (preferably from 4 to 30 parts by weight and further preferably from 5 to 20 parts by weight) with respect to 100 parts by weight of the acrylic polymer (B1).

Such pressure-sensitive adhesive composition may be used singly or in combination of two or more kinds. Further, the pressure-sensitive adhesive composition may be a pressure-sensitive adhesive of any form, such as an emulsion type pressure-sensitive adhesive, a solvent type pressure-sensitive adhesive or a hot-melt type pressure-sensitive adhesive.

The pressure-sensitive adhesive layer (B) may have either form of a single layer structure and a laminated structure. The thickness (thickness after drying or curing) of the pressure-sensitive adhesive layer (B) may be suitably selected for example within a range of from 4 to 100 μm (preferably from 4 to 50 μm and more preferably from 10 to 40 μm).

The pressure-sensitive adhesive layer (B) is not restricted in the forming method therefor, and may be formed, for example, by a method of coating a pressure-sensitive adhesive composition on a predetermined surface, followed by an optional drying or a curing, or a method of coating a pressure-sensitive adhesive composition on a separator (releasable liner), followed by an optional drying or a curing to obtain a pressure-sensitive adhesive layer, and transferring such pressure-sensitive adhesive layer by adhering onto a predetermined surface. For coating the pressure-sensitive adhesive composition, a common coating equipment (such as a gravure roll coater, a reverse roll coater, a kiss roll coater, a dip roll coater, a bar coater, a knife coater or a spray coater) can be used.

Base material

The double-faced pressure-sensitive adhesive tape or sheet (light-reflective/shielding double-faced pressure-sensitive adhesive tape or sheet) of the invention has a structure in which the pressure-sensitive adhesive layers, namely a pressure-sensitive adhesive layer (A) and a pressure-sensitive adhesive layer (B) are formed on each surface of a base material, either directly or across another layer (such as a reflective layer or a light-shielding layer). The base material may be any of a plastic base material, a metal base material and a fibrous base material, but a plastic base material is advantageously utilized in consideration of precision, strength and thinness. Examples of the material or raw material for the plastic base material include polyester (such as polyethylene terephthalate, polyethylene naphthalate, polybutylene terephthalate, or polybutylene naphthalate), polyolefin (such as polyethylene, polypropylene, or an ethylene-propylene copolymer), polyvinyl alcohol, polyvinylidene chloride, polyvinyl chloride, a vinyl chloride-vinyl acetate copolymer, polyvinyl acetate, polyamide, polyimide, cellulose, fluorinated resin, polyether, polystyrene resin (such as polystyrene), polycarbonate and polyethersulfon. These materials may be employed singly or in a combination of two or more kinds.

The base material may have either of a single layer structure and a multi-layered structure.

The base material, when constituting a black layer serving as a light-shielding layer (light-shielding base material) or a white- or silver-color layer serving as a reflective layer (reflective base material), may contain a colorant corresponding to the represented color (such as a black colorant, a white colorant or a silver colorant).

In the case that the base material is not a black layer serving as a light-shielding layer (light-shielding base material) nor a white- or silver-color layer serving as a reflective layer (reflective base material), a base material having transparency (also called "transparent base material") can be used advantageously.

The base material may contain, according to the necessity, conventional additives such as a filler, a flame retardant, an antiaging agent, an antistatic, a softener, an ultraviolet absorber, an antioxidant, a plasticizer, or a surfactant.

The thickness of the base material is not particularly restricted, and may be suitably selected for example within a range of from 1 to 150 μm (preferably from 2 to 100 μm and more preferably from 4 to 75 μm).

The base material is not particularly restricted in the forming method therefor, and may be formed for example by a method of molding a resin composition constituting the base material into a sheet by a molding method such as an extrusion molding, an inflation molding or a calender molding.

Reflective layer

The light-reflective/shielding double-faced pressure-sensitive adhesive tape or sheet of the invention, when having a reflectance of 60% or higher on at least a surface, is provided with a reflective layer for realizing a reflectance of 60% or higher, on a surface (one surface or both surfaces) having the reflectance of 60% or higher. It is important that the reflective layer has such a reflectance capable of realizing a reflectance of 60% or higher on a predetermined surface of the light-reflective/shielding double-faced pressure-sensitive adhesive tape or sheet. Therefore, the reflectance of the reflective layer is, like the reflectance of the light-reflective/shielding double-faced pressure-sensitive adhesive tape or sheet, importantly 60% or higher (from 60 to 100%), preferably 70% or higher and particularly 80% or higher.

Such reflective layer may be any layer capable of exhibiting a reflective property, and may for example be any one of a pressure-sensitive adhesive layer, a resin layer (such as a film layer) and an ink layer (printed layer). In the case that the reflective layer is a resin layer (particularly a film layer), such resin layer (particularly a film layer) serving as the reflective layer may also be used as the base material.

The reflective layer is to be provided, in order to reflect a light irradiating a surface of the light-reflective/shielding double-faced pressure-sensitive adhesive tape or sheet, in such a form as to realize a reflectance of 60% or higher on one surface of the light-reflective/shielding double-faced pressure-sensitive adhesive tape or sheet, and may be provided in such a form as to be exposed on a surface of the light-reflective/shielding double-faced pressure-sensitive adhesive tape or sheet, or in such a form positioned inside a layer having transparency (such as a transparent pressure-sensitive adhesive layer or a transparent base material). In the case that the light-reflective/shielding double-faced pressure-sensitive adhesive tape or sheet has a light-shielding layer as described below, the reflective layer is preferably formed on the surface at the base material side, with respect to the light-shielding layer.

In the invention, the reflective layer is preferably a resin layer (such as a film layer), and particularly preferably a film layer. The reflective layer may be formed by various material capable of exhibiting a reflective property, such as a pressure-sensitive adhesive composition, a resin composition or an ink composition.

Examples of such reflective layer include a white-colored layer having a white color and a silver-colored layer having a silver color, but a white-colored layer having a white color can be employed advantageously. White color basically means a whitish color having $L^*$, defined in $L^*a^*b^*$ color space, of 87 or larger (from 87 to 100) and preferably 90 or larger (from 90 to 100). In this regard, $a^*$ and $b^*$, defined in the $L^*a^*b^*$ color space, each can be suitably selected according to the value of $L^*$, For example, each of $a^*$ and $b^*$ is preferably within a range of from -10 to 10 (particularly from -5 to 5), and more preferably 0 or about 0 (within a range of from -2 to 2).

Silver color basically means a silver-like color having $L^*$, defined in $L^*a^*b^*$ color space, of from 70 to 90, (preferably from 72 to 88 and more preferably from 75 to 85). In this regard, $a^*$ and $b^*$, defined in the $L^*a^*b^*$ color space, each can be suitably selected according to the value of $L^*$. For example, each of $a^*$ and $b^*$ is preferably within a range of from -10 to 10 (particularly from -5 to 5), and more preferably 0 or about 0 (within a range of from -2 to 2).

In the invention, $L^*$, $a^*$ and $b^*$ defined in the $L^*a^*b^*$ color space can be determined by a measurement with a color difference meter CR-200 (trade name), manufactured by Minolta Ltd. The $L^*a^*b^*$ color space is a color space recommended by the Commission Internationale de l'Eclairage (CIE) in 1976, and means a color space called CIE1976 ($L^*a^*b^*$) color space. Also the $L^*a^*b^*$ color space is defined in Japanese Industrial Standards in JIS Z8729.

It is important that such reflective layer such as a white-colored layer or a silver-colored layer contains a colorant corresponding to the represented color. In the case that the reflective layer is a white-colored layer, for example a white-colored colorant may be used as the colorant. Also in the case that the reflective layer is a silver-colored layer, for example a silver-colored colorant may be used as the colorant. More specifically, when the reflective layer is an ink layer showing a white color (white-colored ink layer, particularly a printed layer showing a white color (white-colored printed layer)), the white-colored ink layer can be formed for example by a white ink composition principally containing a white-colored colorant. On the other hand, when the reflective layer is an ink layer showing a silver color (silver-colored ink layer, particularly a printed layer showing a silver color (silver-colored printed layer)), the silver-colored ink layer can be formed for example by a silver-colored ink composition principally containing a silver-colored colorant.

Further, when the reflective layer is a resin layer showing a white color (white-colored resin layer, particularly a film layer showing a white color (white-colored film layer)), the white-colored resin layer can be formed for example by a resin composition containing a white-colored resin, or a resin composition containing a white-colored colorant. On the other hand, when the reflective layer is a resin layer showing a silver color (silver-colored resin layer, particularly a film layer showing a silver color (silver-colored film layer)), the silver-colored resin layer can be formed for example by a resin composition containing a silver-colored colorant.

Each of the white-colored colorant and the silver-colored colorant may be any colorant (coloring agent) such as a pigment or a dye, but a pigment can be employed advantageously. Specific examples of the white-colored colorant include inorganic white colorants such as titanium oxide (titanium dioxide such as rutile type titanium dioxide or anatase type titanium dioxide), zinc oxide, aluminum oxide, silicon oxide, zirconium oxide, magnesium oxide, calcium oxide, tin oxide, barium oxide, cesium oxide, yttrium oxide, magnesium carbonate, calcium carbonate (such as light calcium carbonate or heavy calcium carbonate), barium carbonate, zinc carbonate, aluminum hydroxide, calcium hydroxide, magnesium hydroxide, zinc hydroxide, aluminum silicate, magnesium silicate, calcium silicate, barium sulfate, calcium sulfate, barium stearate, zinc oxide, zinc sulfide, talc, silica, alumina, clay, caolin, titanium phosphate, mica, gypsum, white carbon, diatomaceous earth, bentonite, lithopone, zeolite, sericite, and hydrated halloysite, and organic white colorants such as acrylic resin particles, polystyrene type resin particles, polyurethane type resin particles, amide type resin particles, polycarbonate type resin particles, silicone type resin particles, urea-formalin type resin particles, and melamine type resin particles. As the white-colored colorant, also employable is a fluorescent whitening agent, which can be suitably selected among those already known. The white-colored colorant may be employed singly or in a combination of two or more kinds.

Also examples of the silver-colored colorant include silver and aluminum. The silver-colored colorant may be employed singly or in a combination of two or more kinds.

The ink composition for forming the reflective layer (such as a white-colored ink composition or a silver-colored ink composition) contains, in addition to the colorant, a binder, a dispersant, a solvent and the like according to the necessity. The binder is not particularly restricted, and examples thereof include conventional resins (for example thermoplastic resins, thermally curable resins and photocurable resins) such as a polyurethane resin, a phenolic resin, an epoxy resin, an urea-melamine resin, a silicone resin, a phenoxy resin, a methacrylic resin, an acrylic resin, a polyallylate resin, a polyester resin (such as polyethylene terephthalate), a polyolefin resin (such as polyethylene, polypropylene or an ethylene-propylene copolymer), a polystyrene resin (such as polystyrene, a styren-acrylonitrile copolymer, a styrene-butadiene copolymer, a styrene-maleic anhydride copolymer, or an acrylonitrile-butadiene-styrene resin), polyvinyl chloride, a vinyl chloride-vinyl acetate copolymer, polyvinyl acetate, polyvinylidene chloride, polycarbonate, a cellulose (such as a cellulose acetate resin or an ethyl cellulose resin), and polyacetal. The binder may be employed singly or in a combination of two or more kinds.

In the resin composition for forming a white-colored resin layer (particularly a white-colored film layer) or a silver-colored resin layer (particularly a silver-colored film layer), examples of the resin (white-colored resin or resin of another color such as a transparent resin) include polyesters (such as polyethylene terephthalate, polyethylene naphthalate, polybutylene terephthalate or polybutylene naphthalate), polyolefins (such as polyethylene, polypropylene or ethylene-propylene copolymer), polyvinyl alcohol, polyvinylidene chloride, polyvinyl chloride, a vinyl chloride-vinyl acetate copolymer, polyvinyl acetate, polyamide, polyimide, a cellulose, fluorinated resin, polyether, polystyrenic resin (such as polystyrene), polycarbonate, and polyethersulfon. In case of employing a white-colored colorant or a silver-colored colorant, a transparent resin is preferably employed as the resin. The resin may be employed singly or in a combination of two or more kinds.

The resin composition for forming the white-colored resin layer or the silver-colored resin layer may contain, according to the necessity, conventional additives such as a filler, a flame retardant, an antiaging agent, an antistatic, a softener, an ultraviolet absorber, an antioxidant, a plasticizer, or a surfactant.

Among the reflective layer, a silver-colored layer may also be formed by an evaporation method of a metal component, capable of exhibiting a silver-like color, such as silver or aluminum. As the evaporation method, employable is a reduced-pressure evaporation (vacuum evaporation) process, a physical sputtering process or a chemical sputtering process.

The reflective layer may have either form of a single layer structure and a multi-layered structure, but preferably has a multi-layered structure for further improving the reflective property. Therefore, the light-reflective/shielding double-faced pressure-sensitive adhesive tape or sheet preferably has a reflective layer of a multi-layered structure (particularly a white-colored layer of a multi-layered structure). In the case that the reflective layer has a multi-layered structure, the number of the layers in the reflective layer can be two or larger, and can be selected for example within a range of from 2 to 10, preferably from 2 to 6 (further preferably from 2 to 4 and particularly preferably 2).

In the case that the reflective layer has a multi-layered structure, it is important to regulate not the reflectance of each reflective layer but the reflectance in the entire reflective layer of the multi-layered structure, in such a manner that the light-reflective/shielding double-faced pressure-sensitive adhesive tape or sheet has a reflectance of 60% or higher.

The thickness of the reflective layer (in case of a reflective layer of a multi-layered structure, the thickness of the entire reflective layer of the multi-layered structure) is not particularly restricted and can be suitably selected for example within a range of from 5 to 150 $\mu$m (preferably from 10 to 100 $\mu$m). Further, in case of a silver-colored layer formed by an evaporation method as a reflective layer, the thickness is not particularly restricted and may be for example within a range of from 0.3 to 2 $\mu$m (preferably from 0.4 to 1 $\mu$m and more preferably from 0.4 to 0.5 $\mu$m).

In the invention, the reflective layer may be a base material (namely a reflective base material) or a pressure-sensitive adhesive layer (namely a reflective pressure-sensitive adhesive layer), but is preferably a layer provided on the base material (particularly a printed layer (reflective printed layer) provided between the base material and the light-shielding layer). In the case that the reflective layer has a multi-layered structure, a reflective base material and a reflective pressure-sensitive adhesive layer may be included as layers belonging to the reflective layer of multi-layered structure. More specifically, examples of the layer structure of the reflective layer include a layer structure formed by one or more reflective printed layers, a layer structure formed by a reflective base material and one or more reflective printed layers formed thereon, a layer structure formed by one or more reflective printed layers and a reflective pressure-sensitive adhesive layer formed thereon, and a layer structure formed by a reflective base material, one or more reflective printed layers formed thereon, and a reflective pressure-sensitive adhesive layer formed thereon.

The reflective layer may also have a multi-layered structured including a white-colored layer and a silver-colored layer. When the reflective layer thus includes a white-colored layer and a silver-colored layer, at least either of the white-colored layer and the silver-colored layer may be a reflective base material or a reflective pressure-sensitive adhesive layer.

The forming method for the reflective layer is not particularly restricted, and may be suitably selected from conventional forming methods for the reflective layer, according to the type and the layer structure of the reflective layer. More specifically, when the reflective layer is for example a reflective printed layer formed by an ink composition on the base material, such reflective printed layer may be formed, for example, by a method of coating the ink composition for forming reflective printed layer on the base material, followed by an optional drying, or by a method utilizing various printing process (such as gravure printing, flexographic printing, offset printing, letterpress printing, or screen printing). Further, when the reflective layer is a silver-colored layer, such silver-colored layer as a reflective layer may also be formed by a method utilizing evaporation, as described above. Moreover, when the reflective layer is a reflective base material formed by a plastic material, it may be formed for example by a method of molding a plastic composition constituting the reflective base material into a sheet by a molding method such as an extrusion molding, an inflation molding or a calender molding. Further, in the case that the reflective layer is a multi-layered reflective layer including a reflective base material, such reflective layer may be formed by a process combining the aforementioned methods.

Light-shielding layer

The light-reflective/shielding double-faced pressure-sensitive adhesive tape or sheet of the invention, when having a transmittance of 0.3% or lower, is provided with a light-shielding layer for realizing a transmittance of 0.3% or lower. It is important that the light-shielding layer has such a transmittance capable of realizing a transmittance of 0.3% or lower in the light-reflective/shielding double-faced pressure-sensitive adhesive tape or sheet. Therefore, the transmittance of the light-shielding layer is, like the transmittance of the light-reflective/shielding double-faced pressure-sensitive adhesive tape or sheet, importantly 0.3% or lower (from 0 to 0.3%), preferably 0.1% or lower (more preferably 0.05% or lower) and further 0.03% or lower (particularly 0.01% or lower).

As the transmittance of the light-shielding layer corresponds to (or coincides with) the transmittance of the light-reflective/shielding double-faced pressure-sensitive adhesive tape or sheet, the transmittance of the light-shielding layer can be determined by measuring the transmittance of the light-reflective/shielding double-faced pressure-sensitive adhesive tape or sheet, without extracting the light-shielding layer from the light-reflective/shielding double-faced pressure-sensitive adhesive tape or sheet.

Such light-shielding layer may be any layer capable of exhibiting a light-shielding property, and may for example be any one of a pressure-sensitive adhesive layer, a resin layer (such as a film layer) and an ink layer (printed layer). In the invention, the light-shielding layer is preferably an ink layer, and particularly a printed layer (light-shielding printed layer). The light-shielding layer can be formed by various materials (such as a pressure-sensitive adhesive composition, a resin composition or an ink composition) capable of exhibiting a light-shielding property.

In the invention, the light-shielding layer is preferably a black-colored layer showing black color. In the black-colored layer, black color basically means a blackish color having L*, defined in L*a*b* color space, of 35 or less (from 0 to 35), preferably 30 or less (from 0 to 30) and more preferably 25 or less (from 0 to 25). In this regard, a* and b*, defined in the L*a*b* color space, each can be suitably selected according to the value of L*. For example, each of a* and b* is preferably within a range of from -10 to 10 (particularly from -5 to 5), and more preferably 0 or about 0 (within a range of from -2 to 2).

It is important that the light-shielding layer such as a black-colored layer contains a colorant corresponding to the represented color. In the case that the light-shielding layer is a black-colored layer, for example a black-colored colorant may be employed. More specifically, when the light-shielding layer is an ink layer showing a black color (black-colored ink layer), particularly a printed layer showing a black color (black-colored printed layer), the black-colored ink layer (particularly, the black-colored printed layer) can be formed, for example, by a black ink composition principally containing a black-colored colorant.

Further, the light-shielding layer may be a resin layer showing a black color (black resin layer, particularly a film layer showing black color (black film layer)). When the light-shielding layer is a black resin layer (black-colored resin layer), the black resin layer can be formed, for example, by a black-colored resin composition principally containing a black-colored colorant.

The black-colored colorant may be any colorant (coloring agent) such as a pigment or a dye, but a pigment can be employed advantageously. Specific examples of the black-colored colorant include carbon black (such as furnace black, channel black, acetylene black, thermal black or lamp black), graphite, copper oxide, manganese dioxide, aniline black, perylene black, titanium black, cyanine black, active charcoal, ferrite (such as non-magnetic ferrite or magnetic ferrite), magnetite, chromium oxide, iron oxide, molybdenum disulfide, chromium complex, a composite oxide type black dye, and an anthraquinone type organic black dye. The black-colored colorant may be employed singly or in a combination of two or more kinds.

As the black-colored colorant, employable also is a colorant mixture in which a cyan-colored colorant (blue-green colorant), a magenta-colored colorant (red-purple colorant) and a yellow-colorant colorant (yellow colorant). Further, a film layer showing black color may be a multi-layered film layer, constituted of a film layer formed by a cyan ink composition principally containing a cyan-colored colorant, a film layer formed by a magenta ink composition principally containing a magenta-colored colorant, and a film layer formed by a yellow ink composition principally containing a yellow-colored colorant.

Among the cyan colorants, examples of pigment (cyan-colored pigment) include C.I. Pigment Blue 1, 2, 3, 15, 15:1, 15:2, 15:3, 15:4, 15:5, 15:6, 16, 17, 17:1, 18, 22, 25, 56, 60, 63, 65, 66; C.I. Vat Blue 4, 60; and C.I. Pigment Green 7. Among the cyan colorants, examples of dye (cyan-colored dye) include C.I. Solvent Blue 25, 36, 60, 70, 93, 95; C.I. Acid Blue 6 and 45.

Among the magenta colorants, examples of pigment (magenta-colored pigment) include C.I. Pigment Red 1, 2, 3, 4, 5, 6, 7, 8, 9, 10, 11, 12, 13, 14, 15, 16, 17, 18, 19, 21, 22, 23, 30, 31, 32, 37, 38, 39, 40, 41, 42, 48:1, 48:2, 48:3, 48:4, 49, 49:1, 50, 51, 52, 52:2, 53:1, 54, 55, 56, 57:1, 58, 60, 60:1, 63, 63:1, 63:2, 64, 64:1, 67, 68, 81, 83, 87, 88, 89, 90, 92, 101, 104, 105, 106, 108, 112, 114, 122, 123, 139, 144, 146, 147, 149, 150, 151, 163, 166, 168, 170, 171, 172, 175, 176, 177, 178, 179, 184, 185, 187, 190, 193, 202, 206, 207, 209, 219, 222, 224, 238, 245; C.I. Pigment Violet 3, 9, 19, 23, 31, 32, 33, 36, 38, 43, 50; C.I. Vat Red 1, 2, 10, 13, 15, 23, 29 and 35.

Among the magenta colorants, examples of dye (magenta-colored dye) include C.I. Solvent Red 1, 3, 8, 23, 24, 25, 27, 30, 49, 52, 58, 63, 81, 82, 83, 84, 100, 109, 111, 121, 122; C.I. Disperse Red 9; C.I. Solvent Violet 8, 13, 14, 21, 27; C.I. Disperse Violet 1; C.I. Basic Red 1, 2, 9, 12, 13, 14, 15, 17, 18, 22, 23, 24, 27, 29, 32, 34, 35, 36, 37, 38, 39, 40; C.I. Basic Violet 1, 3, 7, 10, 14, 15, 21, 25, 26, 27 and 28.

Among the yellow colorants, examples of pigment (yellow-colored pigment) include C.I. Pigment Orange 31, 43; C.I. Pigment Yellow 1, 2, 3, 4, 5, 6, 7, 10, 11, 12, 13, 14, 15, 16, 17, 23, 24, 34, 35, 37, 42, 53, 55, 65, 73, 74, 75, 81, 83, 93, 94, 95, 97, 98, 100, 101, 104, 108, 109, 110, 113, 114, 116, 117, 120, 128, 129, 133, 138, 139, 147, 150, 151, 153, 154, 155, 156, 167, 172, 173, 180, 185, 195; C.I. Vat Yellow 1, 3, and 20. Also among the yellow colorants, examples of dye (yellow-colored dye) include C.I. Solvent Yellow 19, 44, 77, 79, 81, 82, 93, 98, 103; 104, 112, and 162.

In the case that the black-colored colorant is a colorant mixture formed by mixing a cyan-colored colorant, a magenta-colored colorant and a yellow-colored colorant, each of the cyan-colored colorant, the magenta-colored colorant and the yellow-colored colorant may be used singly or in a combination of two or more kinds. The mixing ratio (or blending ratio) of the cyan-colored colorant, the magenta-colored colorant and the yellow-colored colorant in the colorant mixture is not particularly restricted as long as a black-like color can be exhibited, and may be suitably selected according for example to the type of each colorant. The contents of the cyan-colored colorant, the magenta-colored colorant and the yellow-colored colorant in the colorant mixture can be suitably selected for example within a range, with respect to the total amount of the colorants, of cyan-colored colorant/magenta-colored colorant/yellow-colored colorant = 10 - 50wt%/ 10 - 50wt%/10 - 50wt% (preferably 20 - 40wt%/20 - 40wt%/20 - 40wt%).

In the case that the light-shielding layer is an ink layer such as a printed layer, as an ink composition for forming such ink layer, employed is a black-color ink composition principally containing a black-colored colorant as the colorant. The black-color ink composition contains, in addition to the black-colored colorant, a binder, a dispersant, a solvent and the like according to the necessity. Examples of the binder are those described above as examples for the ink composition for the reflective layer (such as a white-color ink composition or a silver-color ink composition).

Further, the resin to be employed in the black resin layer (particularly black film layer) can be suitably selected from the resins described for use in the resin composition for forming the white-color resin layer (particularly white-color film layer) or the silver-color resin layer (particularly silver-color film layer).

In the invention, the light-shielding layer may have either form of a single layer structure and a multi-layered structure, but preferably has a multi-layered structure. Therefore, the light-reflective/shielding double-faced pressure-sensitive adhesive tape or sheet preferably has a light-shielding layer of a multi-layered structure (particularly a black-color layer of a multi-layered structure). Such multi-layered structure in the light-shielding layer allows to further improve the light-shielding property of the light-shielding layer. In the case that the light-shielding layer has a multi-layered structure, the number of the layers of the light-shielding layer can be two or larger, and can be selected for example within a range of from 2 to 10, preferably from 3 to 8 (further preferably from 4 to 6 and particularly preferably 4).

In the case that the light-shielding layer has a multi-layered structure, it is important to regulate not the transmittance of each light-shielding layer but the transmittance in the entire light-shielding layer of the multi-layered structure, in such a manner that the light-reflective/shielding double-faced pressure-sensitive adhesive tape or sheet has a transmittance of 0.3% or less.

The thickness of the light-shielding layer is not particularly restricted. When the light-shielding layer is for example formed by a printed layer (light-shielding printed layer), the thickness of the light-shielding printed layer (in case of a light-shielding printed layer of a multi-layered structure, the thickness of the entire light-shielding printed layer) may be selected within a range of from 0.5 to 20 μm (preferably from 2 to 15 μm). Further, in the case that the light-shielding layer is a resin layer or a pressure-sensitive adhesive layer, the thickness of the light-shielding layer may be selected within the ranges described as examples of the thickness of the base material and the pressure-sensitive adhesive layer.

In the invention, the light-shielding layer may be a base material (namely a light-shielding base material) or a pressure-sensitive adhesive layer (namely a light-shielding pressure-sensitive adhesive layer), but is preferably a layer provided on the base material (particularly a printed layer (light-shielding printed layer) provided between the base material and the pressure-sensitive adhesive layer). In the case that the light-shielding layer has a multi-layered structure, a light-shielding base material and a light-shielding pressure-sensitive adhesive layer may be included as layers belonging to the light-shielding layer of multi-layered structure. More specifically, examples of the layer structure of the light-shielding layer include a layer structure formed by one or more light-shielding printed layers, a layer structure formed by a light-shielding base material and one or more light-shielding printed layers formed thereon, a layer structure formed by one or more light-shielding printed layers and a light-shielding pressure-sensitive adhesive layer formed thereon, and a layer structure formed by a light-shielding base material, one or more light-shielding printed layers formed thereon, and a light-shielding pressure-sensitive adhesive layer formed thereon.

The forming method for the light-shielding layer is not particularly restricted, and may be suitably selected from conventional forming methods for the light-shielding layer, according to the type and the layer structure of the light-shielding layer. More specifically, when the light-shielding layer is for example a light-shielding printed layer formed by an ink composition (for example a black-colored ink composition) and provided between the base material and the pressure-sensitive adhesive layer, it may be formed, for example, by a method of coating the ink composition for forming light-shielding printed layer on the base material, followed by an optional drying, or by a method utilizing various printing process (such as gravure printing, flexographic printing, offset printing, letterpress printing, or screen printing). Further, when the light-shielding layer is a resin layer, it may be formed for example by a method of molding a plastic composition into a sheet by a molding method such as an extrusion molding, an inflation molding or a calender molding, and laminating such sheet-shaped resin layer on a predetermined surface (for example on base material). Also, in the case that the light-shielding layer is a multi-layered light-shielding layer including an ink layer, a resin layer and a pressure-sensitive adhesive layer, such light-shielding layer may be formed by a process combining the conventional forming methods for the layers (such as ink layer, resin layer and pressure-sensitive adhesive layer).

Other layers

The light-reflective/shielding double-faced pressure-sensitive adhesive tape or sheet of the invention may further contain other layers. The light-reflective/shielding double-faced pressure-sensitive adhesive tape or sheet, when it has a black-colored layer as a light-shielding layer and a white-colored or silver-colored layer as a reflective layer, may further include, between the black-colored layer and the white- or silver-colored layer, another layer exhibiting a color other than black color and other than white or silver color (particularly a light reflection/shielding regulating layer capable of stepwise regulating the light-shielding property and the light-reflective property from one side to the other). Thus, by forming a reflection/shielding regulating layer as another layer between the reflective layer and the light-shielding layer (namely by forming the reflective layer, the reflection/shielding regulating layer and the light-shielding layer in this order), the light-reflective/shielding double-faced pressure-sensitive adhesive tape or sheet can exhibit a light-shielding property changing stepwise from the side of the light-shielding layer to the side of the reflective layer, and a reflective property changing stepwise from the side of the reflective layer to the side of the light-shielding layer.

In the layer showing a color other than black color, white color or silver color, the color other than black color, white color or silver color may be any color other than black color, white color or silver color, and may be, for example, red color, blue color, yellow color, green color, yellow-green color, orange color, purple color, gray color, or gold color. A color other than black or white color may be silver color or gray color, and a color other than black or silver color may be white color.

The light-reflective/shielding double-faced pressure-sensitive adhesive tape or sheet of the invention, including a base material as described above, has a form of a base-containing double-faced pressure-sensitive adhesive tape or sheet. The light-reflective/shielding double-faced pressure-sensitive adhesive tape or sheet includes a base material, a pressure-sensitive adhesive layer (A) formed on one surface of the base material, and a pressure-sensitive adhesive layer (B) formed on the other surface of the base material, and has characteristics that at least one surface has a reflectance of 60% or higher and/or a transmittance of 0.3% or lower. More specifically, the light-reflective/shielding double-faced pressure-sensitive adhesive tape or sheet may for example have one of following layer structures (A1) to (A9), (B1) to (B9), (C1) to (C10) and (D1) to (D10):

layer structure (A1): structure of transparent pressure-sensitive adhesive layer (A)/light-shielding base material/ transparent pressure-sensitive adhesive layer (B)

layer structure (A2): structure of transparent pressure-sensitive adhesive layer (A)/transparent base material/light-shielding pressure-sensitive adhesive layer (B)

layer structure (A3): structure of light-shielding pressure-sensitive adhesive layer (A)/transparent base material/ transparent pressure-sensitive adhesive layer (B)

layer structure (A4): structure of transparent pressure-sensitive adhesive layer (A)/transparent base material/one or more light-shielding layers/transparent pressure-sensitive adhesive layer (B)

layer structure (A5): structure of transparent pressure-sensitive adhesive layer (A)/light-shielding base material/one or more light-shielding layers/transparent pressure-sensitive adhesive layer (B)

layer structure (A6): structure of transparent pressure-sensitive adhesive layer (A)/one or more light-shielding layers/ transparent base material/transparent pressure-sensitive adhesive layer (B)

layer structure (A7): structure of transparent pressure-sensitive adhesive layer (A)/one or more light-shielding layers/ light-shielding base material/transparent pressure-sensitive adhesive layer (B)

layer structure (A8): structure in (A1) to (A2) and (A4) to (A7), in which the transparent pressure-sensitive adhesive layer (A) is replaced by a light-shielding pressure-sensitive adhesive layer (A)

layer structure (A9): structure in (A1) and (A3) to (A7), in which the transparent pressure-sensitive adhesive layer (B) is replaced by a light-shielding pressure-sensitive adhesive layer (B)

layer structure (B1): structure of transparent pressure-sensitive adhesive layer (A)/reflective base material/transparent pressure-sensitive adhesive layer (B)

layer structure (B2): structure of transparent pressure-sensitive adhesive layer (A)/transparent base material/reflective pressure-sensitive adhesive layer (B)

layer structure (B3): structure of reflective pressure-sensitive adhesive layer (A)/transparent base material/transparent pressure-sensitive adhesive layer (B)

layer structure (B4); structure of transparent pressure-sensitive adhesive layer (A)/transparent base material/one or more reflective layers/transparent pressure-sensitive adhesive layer (B)

layer structure (B5): structure of transparent pressure-sensitive adhesive layer (A)/reflective base material/one or more reflective layers/transparent pressure-sensitive adhesive layer (B)

layer structure (B6): structure of transparent pressure-sensitive adhesive layer (A)/one or more reflective layers/ transparent base inaterial/transparent pressure-sensitive adhesive layer (B)

layer structure (B7): structure of transparent pressure-sensitive adhesive layer (A)/one or more reflective layers/ reflective base material/transparent pressure-sensitive adhesive layer (B)

layer structure (B8): structure of (B1) to (B2) and (B4) to (B7), in which the transparent pressure-sensitive adhesive layer (A) is replaced by a reflective pressure-sensitive adhesive layer (A)

layer structure (B9): structure in (B1) and (B3) to (B7), in which the transparent pressure-sensitive adhesive layer (B) is replaced by a reflective pressure-sensitive adhesive layer (B)

layer structure (C1): structure of transparent pressure-sensitive adhesive layer (A)/transparent base material/one or more reflective layers/one or more light-shielding layers/transparent pressure-sensitive adhesive layer (B)

layer structure (C2): structure of transparent pressure-sensitive adhesive layer (A)/reflective base material/one or more reflective layers/one or more light-shielding layers/transparent pressure-sensitive adhesive layer (B)

layer structure (C3): structure of transparent pressure-sensitive adhesive layer (A)/one or more reflective layers/ transparent base material/one or more light-shielding layers/transparent pressure-sensitive adhesive layer (B)

layer structure (C4): structure of transparent pressure-sensitive adhesive layer (A)/one or more reflective layers/ reflective base material/one or more light-shielding layers/transparent pressure-sensitive adhesive layer (B)

layer structure (C5): structure of transparent pressure-sensitive adhesive layer (A)/one or more reflective layers/ light-shielding base material/one or more light-shielding layers/transparent pressure-sensitive adhesive layer (B)

layer structure (C6): structure in (C1) to (C5), in which the transparent pressure-sensitive adhesive layer (B) is replaced by a light-shielding pressure-sensitive adhesive layer (B)

layer structure (C7): structure in (C1) to (C5), in which the transparent pressure-sensitive adhesive layer (A) is replaced by a reflective pressure-sensitive adhesive layer (A)

layer structure (C8): structure in (C1) to (C5), in which the transparent pressure-sensitive adhesive layer (A) and the transparent pressure-sensitive adhesive layer (B) are exchanged with each other

layer structure (C9): structure in (C8), in which the transparent pressure-sensitive adhesive layer (A) is replaced by a light-shielding pressure-sensitive adhesive layer (A)

layer structure (C10): structure in (C8) to (C9), in which the transparent pressure-sensitive adhesive layer (B) is replaced by a reflective pressure-sensitive adhesive layer (B)

layer structure (D1): structure of transparent pressure-sensitive adhesive layer (A)/transparent base material/one or more light-shielding layers/one or more reflective layers/transparent pressure-sensitive adhesive layer (B)

layer structure (D2): structure of transparent pressure-sensitive adhesive layer (A)/light-shielding base material/one or more light-shielding layers/one or more reflective layers/transparent pressure-sensitive adhesive layer (B)

layer structure (D3): structure of transparent pressure-sensitive adhesive layer (A)/one or more light-shielding layers/ transparent base material/one or more reflective layers/transparent pressure-sensitive adhesive layer (B)

layer structure (D4); structure of transparent pressure-sensitive adhesive layer (A)/one or more light-shielding layers/ light-shielding base material/one or more reflective layers/transparent pressure-sensitive adhesive layer (B)

layer structure (D5): structure of transparent pressure-sensitive adhesive layer (A)/one or more light-shielding layers/ reflective base material/one or more reflective layers/transparent pressure-sensitive adhesive layer (B)

layer structure (D6): structure in (D1) to (D5), in which the transparent pressure-sensitive adhesive layer (B) is replaced by a light-shielding pressure-sensitive adhesive layer (B)

layer structure (D7): structure in (D1) to (D5), in which the transparent pressure-sensitive adhesive layer (A) is replaced by a light-shielding pressure-sensitive adhesive layer (A)

layer structure (D8): structure in (D1) to (D5), in which the transparent pressure-sensitive adhesive layer (A) and the transparent pressure-sensitive adhesive layer (B) are exchanged with each other

layer structure (D9): structure in (D8), in which the transparent pressure-sensitive adhesive layer (A) is replaced by a reflective pressure-sensitive adhesive layer (A)

layer structure (D10): structure in (D8) to (D9), in which the transparent pressure-sensitive adhesive layer (B) is replaced by a light-shielding pressure-sensitive adhesive layer (B).

In the present invention, the light-reflective/shielding double-faced pressure-sensitive adhesive tape or sheet may have a laminated form of sheets, or a form wound in a roll.

In the light-reflective/shielding double-faced pressure-sensitive adhesive tape or sheet, the surface of the pressure-sensitive adhesive layer (A) or the surface of the pressure-sensitive adhesive layer (B) may be protected by a conventional separator (releasable liner).

When the light-reflective/shielding double-faced pressure-sensitive adhesive tape or sheet of the invention has a reflectance of 60% or higher on one surface thereof, it can be advantageously utilized as a double-faced pressure-sensitive adhesive tape or sheet having a reflective property (reflective double-faced pressure-sensitive adhesive tape or sheet). Further, when the light-reflective/shielding double-faced pressure-sensitive adhesive tape or sheet of the invention has a transmittance of 0.3% or lower, it can be advantageously utilized as a double-faced pressure-sensitive adhesive tape or sheet having a light-shielding property (light-shielding double-faced pressure-sensitive adhesive tape or sheet). Moreover, when the light-reflective/shielding double-faced pressure-sensitive adhesive tape or sheet of the invention has a reflectance of 60% or higher on one surface thereof and has a transmittance of 0.3% or lower, it can be advantageously utilized as a double-faced pressure-sensitive adhesive tape or sheet having a reflective property and a light-shielding property (reflective/light-shielding double-faced pressure-sensitive adhesive tape or sheet).

Therefore, the light-reflective/shielding double-faced pressure-sensitive adhesive tape or sheet of the invention is useful as a light-reflective/shielding double-faced pressure-sensitive adhesive tape or sheet (light-reflective double-faced pressure-sensitive adhesive tape or sheet, light-shielding double-faced pressure-sensitive adhesive tape or sheet, or light-reflective/shielding double-faced pressure-sensitive adhesive tape or sheet) for use in fixing a liquid crystal display module unit and a backlight unit in a liquid crystal display apparatus (LCD) (particularly a compact liquid crystal display apparatus) which is employed for example in so-called "mobile phones" or in so-called "PDA".

The double-faced pressure-sensitive adhesive tape or sheet, even in case of not reflective nor light-shielding, namely in case of a double-faced pressure-sensitive adhesive tape or sheet without the reflectivity and without the light-shielding property, is useful as a double-faced pressure-sensitive adhesive tape or sheet having an excellent repulsion resistance and an excellent dropping impact resistance.

In case of the aforementioned double-faced pressure-sensitive adhesive tape or sheet without the reflective property and without the light-shielding property, the double-faced pressure-sensitive adhesive tape or sheet can be obtained by employing a transparent substrate, a transparent pressure-sensitive adhesive layer (A) and a transparent pressure-sensitive adhesive layer (B) respectively for the substrate, the pressure-sensitive adhesive layer (A) and the pressure-sensitive adhesive layer (B), and by not providing the reflective layer or the light-shielding layer. Thus, the double-faced pressure-sensitive adhesive tape or sheet without the reflective property and without the light-shielding property has a layer structure of transparent pressure-sensitive adhesive layer (A)/transparent base material/transparent pressure-sensitive adhesive layer (B). Such double-faced pressure-sensitive adhesive tape or sheet may have a roll form or a sheet form as described above, and the surfaces of the pressure-sensitive adhesive layers may be protected by a conventional separator.

Further, the liquid crystal display apparatus of the invention includes a liquid crystal display module unit and a backlight unit and has such a structure that the liquid crystal display module unit and the backlight unit are fixed by the aforementioned light-reflective/shielding double-faced pressure-sensitive adhesive tape or sheet.

In case of utilizing the light-reflective/shielding double-faced pressure-sensitive adhesive tape or sheet, the liquid crystal display apparatus of the invention is includs a liquid crystal display module unit and a backlight unit and the liquid crystal display module unit and the backlight unit are fixed by the aforementioned light-reflective/shielding double-faced pressure-sensitive adhesive tape or sheet (double-faced pressure-sensitive adhesive tape or sheet having a light reflective property and/or a light-shielding property, which has pressure-sensitive adhesive layers disposed on both surfaces of a base material, in which at least one surface thereof has a reflectance of 60% or higher and/or a transmittance of 0.3% or lower, and which is for use in fixing a liquid crystal display module unit and a backlight unit, in which the pressure-sensitive adhesive layer on one surface of the base material is the aforementioned pressure-sensitive adhesive layer (A) and the pressure-sensitive adhesive layer on the other surface of the base material is the aforementioned pressure-sensitive adhesive layer (B). In the case that the light-reflective/shielding double-faced pressure-sensitive adhesive tape or sheet has a reflectance less than 60% on one surface and a reflectance of 60% or higher on the other surface, the surface having the reflectance less than 60% may be positioned on the side of the liquid crystal display module unit and the surface having the reflectance of 60% or higher may be positioned on the side of the backlight unit, or, the surface having the reflectance less than 60% may be positioned on the side of the backlight unit and the surface having the reflectance of 60% or higher may be positioned on the side of the liquid crystal display module unit.

In a liquid crystal display apparatus (particularly a compact liquid crystal display apparatus employed in so-called "mobile phones" or so-called "PDA"), the backlight unit usually includes a polycarbonate substrate. Therefore, in adhering the light-reflective/shielding double-faced pressure-sensitive adhesive tape or sheet onto the backlight unit, it is important to use the light-reflective/shielding double-faced pressure-sensitive adhesive tape or sheet in such a form that the pressure-sensitive adhesive layer (B) is in contact with the polycarbonate substrate of the backlight unit.

In a liquid crystal display apparatus (particularly a compact liquid crystal display apparatus employed in so-called "mobile phones" or so-called "PDA"), the surface of the liquid crystal display module unit is formed as a hard coated surface, formed by coating a hard coat agent, or a surface formed by triacetyl cellulose. Therefore, in adhering the light-reflective/shielding double-faced pressure-sensitive adhesive tape or sheet onto the liquid crystal display module unit, it is important to use the light-reflective/shielding double-faced pressure-sensitive adhesive tape or sheet in such a form that the pressure-sensitive adhesive layer (A) is in contact with the hard coat surface or the triacetyl cellulose surface of the liquid crystal display module unit.

Examples

In the following, the present invention will be further clarified by examples, but the present invention is not limited by these examples. In the examples, reflectance (%), L*, a* and b* defined in L*a*b* color space, and gel fraction were determined by following measuring methods.

(Measuring method for reflectance)

The reflectance (%) was determined, utilizing a spectrophotometer MPS-2000 manufactured by Shimadzu Corp., by irradiating a surface of white-colored film layer side in a different-colored laminated base material of the pressure-sensitive adhesive tape or sheet with a light of a wavelength of 550 nm and measuring an intensity of a light reflected from the irradiated surface.

(Measuring method for L*, a* and b*)

L*, a* and b* defined in the L*a*b* color space were measured, with a color difference meter CR-200 (trade name), manufactured by Minolta Ltd.

(Gel fraction measuring method)

An acrylic pressure-sensitive adhesive composition for forming each pressure-sensitive adhesive layer (for example acrylic pressure-sensitive adhesives (A1) - (A5) and acrylic pressure-sensitive adhesive (B1) - (B7)) is coated on a releasable liner and dried or cured to form a pressure-sensitive adhesive layer. About 0.1 g of such pressure-sensitive adhesive layer are wrapped in a tetrafluoroethylene sheet of 0.2 $\mu$m (NTF1122 (trade name), manufactured by Nitto Denko Corp.) and bound with a string, and the weight of the wrap is measured as a weight before immersion. The weight before immersion is a total weight of the pressure-sensitive adhesive layer, the tetrafluoroethylene sheet and the string. Also the weight of the tetrafluoroethylene sheet and the string is also measured as a weight of the wrapping.

Then the pressure-sensitive adhesive layer, wrapped in the tetrafluoroethylene sheet and bound with the string, is immersed in a 50-ml container filled with ethyl acetate, and is let to stand for one week (7 days) at the room temperature. Thereafter, the tetrafluoroethylene sheet is taken out from the container and dried at 130°C for 2 hours in a dryer to eliminate ethyl acetate, and the weight of the sample is measured as a weight after immersion.

Then the gel fraction is calculated according to the following formula:

$$\text{gel fraction (wt\%)} = (A - B)/(C - B) \times 100 \quad (1)$$

wherein A indicates the weight after immersion, B indicates the weight of wrapping and C indicates the weight before immersion.

(Preparation example 1 of acrylic polymer)

In a separable flask, 95 parts by weight of 2-ethylhexyl acrylate, 5 parts by weight of acrylic acid, 0.2 parts by weight of azobisisobutyronitrile, and 186.1 parts by weight of ethyl acetate as a polymerization solvent were charged, and were agitated for one hour under nitrogen gas introduction. After the oxygen in the polymerization system was removed in this manner, the mixture was heated to 63°C and reacted for 10 hours to obtain a solution containing an acrylic polymer and having a solid concentration of 30wt%. The acrylic polymer in the solution had a weight-average molecular weight of 1,200,000.

(Preparation example 2 of acrylic polymer)

In a separable flask, 95 parts by weight of n-butyl acrylate, 5 parts by weight of acrylic acid, 0.2 parts by weight of azobisisobutyronitrile, and 233.8 parts by weight of ethyl acetate as a polymerization solvent were charged, and were agitated for one hour under nitrogen gas introduction. After the oxygen in the polymerization system was removed in this manner, the mixture was heated to 63°C and reacted for 10 hours to obtain a solution containing an acrylic polymer and having a solid concentration of 30wt%. The acrylic polymer in the solution had a weight-average molecular weight of 700,000.

(Preparation example 1 of low-molecular weight polymer component)

In a separable flask, 95 parts by weight of cyclohexyl methacrylate (homopolymer (polycyclohexyl methacrylate) having a glass transition temperature of 66°C), 5 parts by weight of acrylic acid, 1.5 parts by weight of 2-mercaptoethanol, 0.2 parts by weight of azobisisobutyronitrile and 100 parts by weight of toluene as a polymerization solvent were charged, and were agitated for one hour under nitrogen gas introduction. After the oxygen in the polymerization system was removed in this manner, the mixture was heated to 70°C and reacted for 3 hours, further reacted at 75°C for 2 hours to obtain a solution containing a low-molecular weight polymer component and having a solid concentration of 50wt%. The low-molecular weight polymer component in the solution had a weight-average molecular weight of 3,500.

(Example 1)

To 100 parts by weight of the acrylic polymer obtained in the preparation example 1 of the acrylic polymer, 5 parts by weight of silicone rubber fine particles (trade name Torayfill E-600, manufactured by Toray-Dow Coming Silicone Co.), 0.02 parts by weight of an epoxy-type crosslinking agent (trade name Tetrad C, manufactured by Mitsubishi Gas Chemical Co.), and 1 part by weight of an isocyanate type crosslinking agent (trade name Coronate L, manufactured by Nippon Polyurethane Industry Co.) were added to prepare an acrylic pressure-sensitive adhesive composition containing silicone rubber fine particles (also called "acrylic pressure-sensitive adhesive (A1)").

Also, to 100 parts by weight of the acrylic polymer obtained in the preparation example 1 of the acrylic polymer, 10 parts by weight of the low-molecular weight polymer component obtained in the preparation example 1 of the low-molecular weight polymer component, 0.02 parts by weight of an epoxy-type crosslinking agent (trade name Tetrad C, manufactured by Mitsubishi Gas Chemical Co.), and 1 part by weight of an isocyanate type crosslinking agent (trade name Coronate L, manufactured by Nippon Polyurethane Industry Co.) were added to prepare an acrylic pressure-sensitive adhesive composition containing low-molecular weight polymer component (also called "acrylic pressure-sensitive adhesive (B 1)").

On a surface of a white-colored base material (polyethylene terephthalate film) of a thickness of 12 $\mu$m, the acrylic pressure-sensitive adhesive (A1) was coated and dried or cured to obtain an acrylic pressure-sensitive adhesive (A1) layer of a thickness of 35 $\mu$m, and a separator, of which a surface was subjected to a releasing treatment with a silicone type releasing treatment agent, was laminated on the acrylic pressure-sensitive adhesive (A1) layer. Also on the other surface of the white-colored base material, the acrylic pressure-sensitive adhesive (B1) was coated and dried or cured to obtain an acrylic pressure-sensitive adhesive (B1) layer of a thickness of 35 $\mu$m, and a separator, of which a surface was subjected to a releasing treatment with a silicone type releasing treatment agent, was laminated on the acrylic pressure-sensitive adhesive (B1) layer, thereby obtaining a double-faced pressure-sensitive adhesive tape or sheet having a layer structure of acrylic pressure-sensitive adhesive (A1) layer/white-colored base material/ acrylic pressure-sensitive adhesive (B 1) layer. The acrylic pressure-sensitive adhesive (A1) layer had a gel fraction of 56wt%, and the acrylic pressure-sensitive adhesive (B1) layer had a gel fraction of 54wt%.

The double-faced pressure-sensitive adhesive tape or sheet obtained in Example 1 had a reflectance of 85% on the surface of the acrylic pressure-sensitive adhesive (A1) layer, as measured by the measuring method for transmittance above, and 85% on the surface of the acrylic pressure-sensitive adhesive (B1) layer. Also in a measurement of L*, a* and b* defined in the L*a*b* color space according to the measurement method for L*, a* and b* above on the double-faced pressure-sensitive adhesive tape or sheet, the surface at the side of the acrylic pressure-sensitive adhesive (A1) layer had L* of 92.1, a* of 0.87 and b* of 0.64. Also the surface at the side of the acrylic pressure-sensitive adhesive (B1) layer had L* of 92.3, a* of 0.30 and b* of 0.58.

(Example 2)

The acrylic pressure-sensitive adhesive (A1) was prepared in the same manner as in Example 1. Also, to 100 parts by weight of the acrylic polymer obtained in the preparation example 2 of the acrylic polymer, 25 parts by weight of the low-molecular weight polymer component obtained in the preparation example 1 of the low-molecular weight polymer component, 0.07 parts by weight of an epoxy-type crosslinking agent (trade name Tetrad C, manufactured by Mitsubishi Gas Chemical Co.), and 1 part by weight of an isocyanate type crosslinking agent (trade name Coronate L, manufactured by Nippon Polyurethane Industry Co.) were added to prepare an acrylic pressure-sensitive adhesive composition containing low-molecular weight polymer component (also called "acrylic pressure-sensitive adhesive (B2)").
On a surface of a white-colored base material (polyethylene terephthalate film) of a thickness of 12 $\mu$m, same as in Example 1, the acrylic pressure-sensitive adhesive (A1) was coated and dried or cured to obtain an acrylic pressure-sensitive adhesive (A1) layer of a thickness of 35 $\mu$m, and a separator, of which a surface was subjected to a releasing treatment with a silicone type releasing treatment agent, was laminated on the acrylic pressure-sensitive adhesive (A1) layer. Also on the other surface of the white-colored base material, the acrylic pressure-sensitive adhesive (B2) was coated and dried or cured to obtain an acrylic pressure-sensitive adhesive (B2) layer of a thickness of 35 $\mu$m, and a separator, of which a surface was subjected to a releasing treatment with a silicone type releasing treatment agent, was laminated on the acrylic pressure-sensitive adhesive (B2) layer, thereby obtaining a double-faced pressure-sensitive adhesive tape or sheet having a layer structure of acrylic pressure-sensitive adhesive (A1) layer/white-colored base material/acrylic pressure-sensitive adhesive (B2) layer. The acrylic pressure-sensitive adhesive (A1) layer had a gel fraction of 56wt% as in Example 1, and the acrylic pressure-sensitive adhesive (B2) layer had a gel fraction of 68wt%.
The double-faced pressure-sensitive adhesive tape or sheet obtained in Example 2, when subjected to a measurement as in Example 1, had a reflectance of 83% or higher on both surfaces. Also in a measurement of L*, a* and b* defined in the L*a*b* color space as in Example 1, on the double-faced pressure-sensitive adhesive tape or sheet obtained in Example 2, the both surfaces had L* of 92 or higher, a* within a range from -1 to 1, and b* within a range from -1 to 1.

(Example 3)

The acrylic pressure-sensitive adhesive (A1) was prepared in the same manner as in Example 1. To 100 parts by weight of the acrylic polymer obtained in the preparation example 1 of the acrylic polymer, 20 parts by weight of silicone rubber fine particles (trade name Torayfill E-600, manufactured by Toray-Dow Corning Silicone Co.), 10 parts by weight of the low-molecular weight polymer component obtained in the preparation example 1 of low-molecular weight polymer component, 0,02 parts by weight of an epoxy-type crosslinking agent (trade name Tetrad C, manufactured by Mitsubishi Gas Chemical Co.), and 1 part by weight of an isocyanate type crosslinking agent (trade name Coronate L, manufactured by Nippon Polyurethane Industry Co.) were added to prepare an acrylic pressure-sensitive adhesive composition containing low-molecular weight polymer component (also called "acrylic pressure-sensitive adhesive (B3)").
On a surface of a white-colored base material (polyethylene terephthalate film) of a thickness of 12 $\mu$m, same as in Example 1, the acrylic pressure-sensitive adhesive (A1) was coated and dried or cured to obtain an acrylic pressure-sensitive adhesive (A1) layer of a thickness of 35 $\mu$m, and a separator, of which a surface was subjected to a releasing treatment with a silicone type releasing treatment agent, was laminated on the acrylic pressure-sensitive adhesive (A1) layer. Also on the other surface of the white colored base material, the acrylic pressure-sensitive adhesive (B3) was coated and dried or cured to obtain an acrylic pressure-sensitive adhesive (B3) layer of a thickness of 35 $\mu$m, and a separator, of which a surface was subjected to a releasing treatment with a silicone type releasing treatment agent, was laminated on the acrylic pressure-sensitive adhesive (B3) layer, thereby obtaining a double-faced pressure-sensitive adhesive tape or sheet having a layer structure of acrylic pressure-sensitive adhesive (A1) layer/white-colored base material/acrylic pressure-sensitive adhesive (B3) layer. The acrylic pressure-sensitive adhesive (A1) layer had a gel fraction of 56wt% as in Example 1, and the acrylic pressure-sensitive adhesive (B3) layer had a gel fraction of 56wt%.
The double-faced pressure-sensitive adhesive tape or sheet obtained in Example 3, when subjected to a measurement as in Example 1, had a reflectance of 83% or higher on both surfaces. Also in a measurement of L*, a* and b* defined in the L*a*b* color space as in Example 1, on the double-faced pressure-sensitive adhesive tape or sheet obtained in Example 3, the both surfaces had L* of 92 or higher, a* within a range from -1 to 1, and b* within a range from -1 to 1.

(Example 4)

To 100 parts by weight of the acrylic polymer obtained in the preparation example 1 of the acrylic polymer, 45 parts by weight of silicone rubber fine particles (trade name Torayfill E-600, manufactured by Toray-Dow Corning Silicone Co.), 0.03 parts by weight of an epoxy-type crosslinking agent (trade name Tetrad C, manufactured by Mitsubishi Gas Chemical Co.), 1 part by weight of an isocyanate type crosslinking agent (trade name Coronate L, manufactured by Nippon Polyurethane Industry Co.), and 15 parts by weight of a pressure-sensitive adhesivity providing resin (trade name Pencel D-125, manufactured by Arakawa Chemical Co., rosin ester type resin) were added to prepare an acrylic pressure-sensitive adhesive composition containing silicone rubber fine particles (also called "acrylic pressure-sensitive adhesive (A2)").

The acrylic pressure-sensitive adhesive (B1) was prepared in the same manner as in Example 1.

On a surface of a white-colored base material (polyethylene terephthalate film) of a thickness of 12 μm, same as in Example 1, the acrylic pressure-sensitive adhesive (A2) was coated and dried or cured to obtain an acrylic pressure-sensitive adhesive (A2) layer of a thickness of 35 μm, and a separator, of which a surface was subjected to a releasing treatment with a silicone type releasing treatment agent, was laminated on the acrylic pressure-sensitive adhesive (A2) layer. Also on the other surface of the white-colored base material, the acrylic pressure-sensitive adhesive (B1) was coated and dried or cured to obtain an acrylic pressure-sensitive adhesive (B1) layer of a thickness of 35 μm, and a separator, of which a surface was subjected to a releasing treatment with a silicone type releasing treatment agent, was laminated on the acrylic pressure-sensitive adhesive (B1) layer, thereby obtaining a double-faced pressure-sensitive adhesive tape or sheet having a layer structure of acrylic pressure-sensitive adhesive (A2) layer/white-colored base material/acrylic pressure-sensitive adhesive (B1) layer. The acrylic pressure-sensitive adhesive (A2) layer had a gel fraction of 60wt%, and the acrylic pressure-sensitive adhesive (B1) layer had a gel fraction of 54wt% as in Example 1.

The double-faced pressure-sensitive adhesive tape or sheet obtained in Example 4, when subjected to a measurement as in Example 1, had a reflectance of 83% or higher on both surfaces. Also in a measurement of L*, a* and b* defined in the L*a*b* color space as in Example 1, on the double-faced pressure-sensitive adhesive tape or sheet obtained in Example 4, the both surfaces had L* of 92 or higher, a* within a range from -1 to 1, and b* within a range from -1 to 1.

(Example 5)

A sample was prepared in the same manner as in Example 2, except for employing a transparent base material (polyethylene terephthalate film, thickness 12 μm) instead of the white-colored base material (polyethylene terephthalate film, thickness 12 μm).

The acrylic pressure-sensitive adhesives employed were the acrylic pressure-sensitive adhesive (A1) and the acrylic pressure-sensitive adhesive (B2) as in Example 2, and the acrylic pressure-sensitive adhesive (A1) layer had a gel fraction of 56wt% while the acrylic pressure-sensitive adhesive (B2) layer had a gel fraction of 68wt%.

(Comparative Example 1)

To 100 parts by weight of the acrylic polymer obtained in the preparation example 1 of the acrylic polymer, 2 parts by weight of silicone rubber fine particles (trade name Torayfill E-600, manufactured by Toray-Dow Corning Silicone Co.), 0.02 parts by weight of an epoxy-type crosslinking agent (trade name Tetrad C, manufactured by Mitsubishi Gas Chemical Co.), and 1 part by weight of an isocyanate type crosslinking agent (trade name Coronate L, manufactured by Nippon Polyurethane Industry Co.) were added to prepare an acrylic pressure-sensitive adhesive composition containing silicone rubber fine particles (also called "acrylic pressure-sensitive adhesive (A3)").

The acrylic pressure-sensitive adhesive (B1) was prepared in the same manner as in Example 1.

On a surface of a white-colored base material (polyethylene terephthalate film) of a thickness of 12 μm, same as in Example 1, the acrylic pressure-sensitive adhesive (A3) was coated and dried or cured to obtain an acrylic pressure-sensitive adhesive (A3) layer of a thickness of 35 μm, and a separator, of which a surface was subjected to a releasing treatment with a silicone type releasing treatment agent, was laminated on the acrylic pressure-sensitive adhesive (A3) layer. Also on the other surface of the white-colored base material, the acrylic pressure-sensitive adhesive (B1) was coated and dried or cured to obtain an acrylic pressure-sensitive adhesive (B1) layer of a thickness of 35 μm, and a separator, of which a surface was subjected to a releasing treatment with a silicone type releasing treatment agent, was laminated on the acrylic pressure-sensitive adhesive (B1) layer, thereby obtaining a double-faced pressure-sensitive adhesive tape or sheet having a layer structure of acrylic pressure-sensitive adhesive (A3) layer/white-colored base material/acrylic pressure-sensitive adhesive (B1) layer. The acrylic pressure-sensitive adhesive (A3) layer had a gel fraction of 57wt%, and the acrylic pressure-sensitive adhesive (B1) layer had a gel fraction of 54wt% as in Example 1.

(Comparative Example 2)

The acrylic pressure-sensitive adhesive (A3) was prepared in the same manner as in Comparative Example 1. Also the acrylic pressure-sensitive adhesive (B2) was prepared in the same manner as in Example 2.

On a surface of a white-colored base material (polyethylene terephthalate film) of a thickness of 12 $\mu$m, same as in Example 1, the acrylic pressure-sensitive adhesive (A3) was coated and dried or cured to obtain an acrylic pressure-sensitive adhesive (A3) layer of a thickness of 35 $\mu$m, and a separator, of which a surface was subjected to a releasing treatment with a silicone type releasing treatment agent, was laminated on the acrylic pressure-sensitive adhesive (A3) layer. Also on the other surface of the white-colored base material, the acrylic pressure-sensitive adhesive (B2) was coated and dried or cured to obtain an acrylic pressure-sensitive adhesive (B2) layer of a thickness of 35 $\mu$m, and a separator, of which a surface was subjected to a releasing treatment with a silicone type releasing treatment agent, was laminated on the acrylic pressure-sensitive adhesive (B2) layer, thereby obtaining a double-faced pressure-sensitive adhesive tape or sheet having a layer structure of acrylic pressure-sensitive adhesive (A3) layer/white-colored base material/acrylic pressure-sensitive adhesive (B2) layer. The acrylic pressure-sensitive adhesive (A3) layer had a gel fraction of 57wt% as in Comparative Example 1, and the acrylic pressure-sensitive adhesive (B2) layer had a gel fraction of 68wt% as in Example 2.

(Comparative Example 3)

To 100 parts by weight of the acrylic polymer obtained in the preparation example 1 of the acrylic polymer, 0.02 parts by weight of an epoxy-type crosslinking agent (trade name Tetrad C, manufactured by Mitsubishi Gas Chemical Co.), and 1 part by weight of an isocyanate type crosslinking agent (trade name Coronate L, manufactured by Nippon Polyurethane Industry Co.) were added to prepare an acrylic pressure-sensitive adhesive composition, not containing silicone rubber fine particles (also called "acrylic pressure-sensitive adhesive (A4)").

The acrylic pressure-sensitive adhesive (B3) was prepared in the same manner as in Example 3.

On a surface of a white-colored base material (polyethylene terephthalate film) of a thickness of 12 $\mu$m, same as in Example 1, the acrylic pressure-sensitive adhesive (A4) was coated and dried or cured to obtain an acrylic pressure-sensitive adhesive (A4) layer of a thickness of 35 $\mu$m, and a separator, of which a surface was subjected to a releasing treatment with a silicone type releasing treatment agent, was laminated on the acrylic pressure-sensitive adhesive (A4) layer. Also on the other surface of the white-colored base material, the acrylic pressure-sensitive adhesive (B3) was coated and dried or cured to obtain an acrylic pressure-seasitive adhesive (B3) layer of a thickness of 35 $\mu$m, and a separator, of which a surface was subjected to a releasing treatment with a silicone type releasing treatment agent, was laminated on the acrylic pressure-sensitive adhesive (B3) layer, thereby obtaining a double-faced pressure-sensitive adhesive tape or sheet having a layer structure of acrylic pressure-sensitive adhesive (A4) layer/white-colored base material/acrylic pressure-sensitive adhesive (B3) layer. The acrylic pressure-sensitive adhesive (A4) layer had a gel fraction of 57wt%, and the acrylic pressure-sensitive adhesive (B3) layer had a gel fraction of 56wt% as in Example 3.

(Comparative Example 4)

The acrylic pressure-sensitive adhesive (A1) was prepared in the same manner as in Example 1. Also to 100 parts by weight of the acrylic polymer obtained in the preparation example 1 of the acrylic polymer, 0.02 parts by weight of an epoxy-type crosslinking agent (trade name Tetrad C, manufactured by Mitsubishi Gas Chemical Co.), and 1 part by weight of an isocyanate type crosslinking agent (trade name Coronate L, manufactured by Nippon Polyurethane Industry Co.) were added to prepare an acrylic pressure-sensitive adhesive composition, not containing low-molecular weight polymer component (also called "acrylic pressure-sensitive adhesive (B4)").

On a surface of a white-colored base material (polyethylene terephthalate film) of a thickness of 12 $\mu$m, same as in Example 1, the acrylic pressure-sensitive adhesive (A1) was coated and dried or cured to obtain an acrylic pressure-sensitive adhesive (A1) layer of a thickness of 35 $\mu$m, and a separator, of which a surface was subjected to a releasing treatment with a silicone type releasing treatment agent, was laminated on the acrylic pressure-sensitive adhesive (A1) layer. Also on the other surface of the white-colored base material, the acrylic pressure-sensitive adhesive (B4) was coated and dried or cured to obtain an acrylic pressure-sensitive adhesive (B4) layer of a thickness of 35 $\mu$m, and a separator, of which a surface was subjected to a releasing treatment with a silicone type releasing treatment agent, was laminated on the acrylic pressure-sensitive adhesive (B4) layer, thereby obtaining a double-faced pressure-sensitive adhesive tape or sheet having a layer structure of acrylic pressure-sensitive adhesive (A1) layer/white-colored base material/acrylic pressure-sensitive adhesive (B4) layer. The acrylic pressure-sensitive adhesive (A1) layer had a gel fraction of 56wt% as in Example 1, and the acrylic pressure-sensitive adhesive (B4) layer had a gel fraction of 56wt%.

(Comparative Example 5)

The acrylic pressure-sensitive adhesive (A1) was prepared in the same manner as in Example 1. Also to 100 parts by weight of the acrylic polymer obtained in the preparation example 2 of the acrylic polymer, 4 parts by weight of the low-molecular weight polymer component obtained in the preparation example 1 of the low-molecular weight polymer component, 0.07 parts by weight of an epoxy-type crosslinking agent (trade name Tetrad C, manufactured by Mitsubishi Gas Chemical Co.), and 1 part by weight of an isocyanate type crosslinking agent (trade name Coronate L, manufactured by Nippon Polyurethane Industry Co.) were added to prepare an acrylic pressure-sensitive adhesive composition, containing low-molecular weight polymer component (also called "acrylic pressure-sensitive adhesive (B5)").

On a surface of a white-colored base material (polyethylene terephthalate film) of a thickness of 12 $\mu$m, same as in Example 1, the acrylic pressure-sensitive adhesive (A1) was coated and dried or cured to obtain an acrylic pressure-sensitive adhesive (A1) layer of a thickness of 35 $\mu$m, and a separator, of which a surface was subjected to a releasing treatment with a silicone type releasing treatment agent, was laminated on the acrylic pressure-sensitive adhesive (A1) layer. Also on the other surface of the white-colored base material, the acrylic pressure-sensitive adhesive (B5) was coated and dried or cured to obtain an acrylic pressure-sensitive adhesive (B5) layer of a thickness of 35 $\mu$m, and a separator, of which a surface was subjected to a releasing treatment with a silicone type releasing treatment agent, was laminated on the acrylic pressure-sensitive adhesive (B5) layer, thereby obtaining a double-faced pressure-sensitive adhesive tape or sheet having a layer structure of acrylic pressure-sensitive adhesive (A1) layer/white-colored base material/acrylic pressure-sensitive adhesive (B5) layer. The acrylic pressure-sensitive adhesive (A1) layer had a gel fraction of 56wt% as in Example 1, and the acrylic pressure-sensitive adhesive (B5) layer had a gel fraction df 70wt%.

(Comparative Example 6)

The acrylic pressure-sensitive adhesive (A1) was prepared in the same manner as in Example 1. Then, to 100 parts by weight of the acrylic polymer obtained in the preparation example 1 of the acrylic polymer, 20 parts by weight of silicone rubber fine particles (trade name Torayfill E-600, manufactured by Toray-Dow Corning Silicone Co.), 0.02 parts by weight of an epoxy-type crosslinking agent (trade name Tetrad C, manufactured by Mitsubishi Gas Chemical Co.), and 1 part by weight of an isocyanate type crosslinking agent (trade name Coronate L, manufactured by Nippon Polyurethane Industry Co.) were added to prepare an acrylic pressure-sensitive adhesive composition, not containing low-molecular weight polymer component (also called "acrylic pressure-sensitive adhesive (B6)").

On a surface of a white-colored base material (polyethylene terephthalate film) of a thickness of 12 $\mu$m, same as in Example 1, the acrylic pressure-sensitive adhesive (A1) was coated and dried or cured to obtain an acrylic pressure-sensitive adhesive (A1) layer of a thickness of 35 $\mu$m, and a separator, of which a surface was subjected to a releasing treatment with a silicone type releasing treatment agent, was laminated on the acrylic pressure-sensitive adhesive (A1) layer. Also on the other surface of the white-colored base material, the acrylic pressure-sensitive adhesive (B6) was coated and dried or cured to obtain an acrylic pressure-sensitive adhesive (B6) layer of a thickness of 35 $\mu$m, and a separator, of which a surface was subjected to a releasing treatment with a silicone type releasing treatment agent, was laminated on the acrylic pressure-sensitive adhesive (B6) layer, thereby obtaining a double-faced pressure-sensitive adhesive tape or sheet having a layer structure of acrylic pressure-sensitive adhesive (A1) layer/white-colored base material/acrylic pressure-sensitive adhesive (B6) layer. The acrylic pressure-sensitive adhesive (A1) layer had a gel fraction of 56wt% as in Example 1, and the acrylic pressure-sensitive adhesive (B6) layer had a gel fraction of 57wt%.

(Comparative Example 7)

To 100 parts by weight of the acrylic polymer obtained in the preparation example 1 of the acrylic polymer, 55 parts by weight of silicone rubber fine particles (trade name Torayfill E-600, manufactured by Toray-Dow Corning Silicone Co.), 0.03 parts by weight of an epoxy-type crosslinking agent (trade name Tetrad C, manufactured by Mitsubishi Gas Chemical Co.), 1 part by weight of an isocyanate type crosslinking agent (trade name Coronate L, manufactured by Nippon Polyurethane Industry Co.), and 15 parts by weight of a pressure-sensitive adhesivity providing resin (trade name Pencel D-125, manufactured by Arakawa Chemical Co., rosin ester type resin) were added to prepare an acrylic pressure-sensitive adhesive composition, containing silicone rubber fine particles (also called "acrylic pressure-sensitive adhesive (A5)").

Also the acrylic pressure-sensitive adhesive (B3) was prepared in the same manner as in Example 3.

On a surface of a white-colored base material (polyethylene terephthalate film) of a thickness of 12 $\mu$m, same as in Example 1, the acrylic pressure-sensitive adhesive (A5) was coated and dried or cured to obtain an acrylic pressure-sensitive adhesive (A5) layer of a thickness of 35 $\mu$m, and a separator, of which a surface was subjected to a releasing treatment with a silicone type releasing treatment agent, was laminated on the acrylic pressure-sensitive adhesive (A5) layer. Also on the other surface of the white-colored base material, the acrylic pressure-sensitive adhesive (B3) was coated and dried or cured to obtain an acrylic pressure-sensitive adhesive (B3) layer of a thickness of 35 μm, and a separator, of which a surface was subjected to a releasing treatment with a silicone type releasing treatment agent, was laminated on the acrylic pressure-sensitive adhesive (B3) layer, thereby obtaining a double-deed pressure-sensitive adhesive tape or sheet having a layer structure of acrylic pressure-sensitive adhesive (A5) layer/white-colored base material/acrylic pressure-sensitive adhesive (B3) layer. The acrylic pressure-sensitive adhesive (A5) layer had a gel fraction of 62wt%, and the acrylic pressure-sensitive adhesive (B3) layer had a gel fraction of 56wt% as in Example 3.

(Comparative Example 8)

The acrylic pressure-sensitive adhesive (A1) was prepared in the same manner as in Example 1. Then, to 100 parts by weight of the acrylic polymer obtained in the preparation example 1 of the acrylic polymer, 40 parts by weight of low-molecular weight polymer component obtained by the preparation example 1 of the low-molecular polymer component, 0.07 parts by weight of an epoxy-type crosslinking agent (trade name Tetrad C, manufactured by Mitsubishi Gas Chemical Co.), and 1 part by weight of an isocyanate type crosslinking agent (trade name Coronate L, manufactured by Nippon Polyurethane Industry Co.) were added to prepare an acrylic pressure-sensitive adhesive composition, containing low-molecular weight polymer component (also called "acrylic pressure-sensitive adhesive (B7)").

On a surface of a white-colored base material (polyethylene terephthalate film) of a thickness of 12 μm, same as in Example 1, the acrylic pressure-sensitive adhesive (A1) was coated and dried or cured to obtain an acrylic pressure-sensitive adhesive (A1) layer of a thickness of 35 μm, and a separator, of which a surface was subjected to a releasing treatment with a silicone type releasing treatment agent, was laminated on the acrylic pressure-sensitive adhesive (A1) layer. Also on the other surface of the white-colored base material, the acrylic pressure-sensitive adhesive (B7) was coated and dried or cured to obtain an acrylic pressure-sensitive adhesive (B7) layer of a thickness of 35 μm, and a separator, of which a surface was subjected to a releasing treatment with a silicone type releasing treatment agent, was laminated on the acrylic pressure-sensitive adhesive (B7) layer, thereby obtaining a double-faced pressure-sensitive adhesive tape or sheet having a layer structure of acrylic pressure-sensitive adhesive (A1) layer/white-colored base material/acrylic pressure-sensitive adhesive (B7) layer. The acrylic pressure-sensitive adhesive (A1) layer had a gel fraction of 56wt% as in Example 1, and the acrylic pressure-sensitive adhesive (B7) layer had a gel fraction of 60wt%.

(Evaluation)

The double-faced pressure-sensitive adhesive tapes or sheets obtained in Examples 1 to 5 and Comparative Examples 1 to 8 were evaluated for the repulsion resistance and the dropping impact resistance, by (evaluation method for repulsion resistance) and (evaluation for dropping impact resistance) below. Results of evaluations are shown in columns "repulsion resistance" and "dropping impact resistance" in Tables 1 and 2.

(Evaluation method for repulsion resistance)

As illustrated Fig. 1A, on an end of the polyethylene terephthalate film (width 10 mm, length 100 mm, thickness 100 μm), "APCFH1" (trade name, manufactured by Nitto Denko Corp., having a surface coating with a hard coating agent; width 10 mm, length 10 mm) was adhered.

Then, as illustrated in Fig. 1B, the "APCFH1" (trade name) on the polyethylene terephthalate film was adhered, across a double-faced pressure-sensitive adhesive tape or sheet of each Example or each Comparative Example (width 10 mm, length 3 mm), onto a polycarbonate plate (width 10 mm, length 30 mm, thickness 2 mm) in such a manner that the ends of the polyethylene terephthalate film and the "APCFH1" (trade name) were located in a position of 20 mm from the end of the polycarbonate plate, and the adhered members were let to stand for 24 hours at 23°C. In this operation, the "APCFH1" (trade name) on the polyethylene terephthalate film and the polycarbonate plate were adhered across the double-faced pressure-sensitive adhesive tape or sheet of each Example or each Comparative Example, in such a state that the surface of the acrylic pressure-sensitive adhesive (A1) - (A5) layer was in contact with the heat coat layer (layer formed by coating the hard coat agent) of the "APCFH1" (trade name).

Then, as illustrated in Fig. 2, the polyethylene terephthalate film was bent in a loop, and was adhered to the polycarbonate plate with a double-faced pressure-sensitive adhesive tape in such a manner that the end of the polyethylene terephthalate film matched the end of the polycarbonate plate, and the adhered members were let to stand for 24 hours at 23°C. Then, after 24 hours at 23°C from the looped adhesion of the polyethylene terephthalate film to the polycarbonate plate, a separation distance of the polyethylene terephthalate film (namely a separation distance in a portion adhered with the double-faced pressure-sensitive adhesive tape or sheet of each Example or each Comparative Example) was measured by a digital microscope, and the repulsion resistance was evaluated by such separation distance of the polyethylene terephthalate film.

Figs. 1A, 1B and 2 are schematic views showing the method for evaluating the repulsion resistance, used in evaluating the repulsion resistance of Examples. More specifically, Fig. 1A is a schematic cross-sectional view illustrating a state where a member having a surface coating with the hard coat agent is adhered to the polyethylene terephthalate film, and Fig. 1B is a schematic cross-sectional view of a state in which the adhered members illustrated in Fig. 1A is adhered to the polycarbonate plate across the double-faced pressure-sensitive adhesive tape or sheet. Fig. 2 is a schematic lateral view illustrating a state where the polyethylene terephthalate film is bent into a loop for measuring the repulsion resistance. In Figs. 1A, 1B and 2, there are illustrated a polyethylene terephthalate film 1, "APCFH1" (trade name) 2, a polycarbonate plate 3, and a double-faced pressure-sensitive adhesive tape or sheet 4.

Evaluation method for dropping impact resistance

A double-faced pressure-sensitive adhesive tape or sheet of each Example or each Comparative Example was punched into a square-U shape as illustrated in Fig. 3A.

Then, as illustrated by Fig. 3B and 3C, at the center of a polycarbonate plate (width 60 mm, length 80 mm, thickness 2 mm), the punched double-faced pressure-sensitive adhesive tape or sheet was adhered by means of the acrylic pressure-sensitive adhesive (B1) - (B7) layer. Thus, the double-faced pressure-sensitive adhesive tape or sheet was adhered to the polycarbonate plate, in such a manner that the acrylic pressure-sensitive adhesive (B1) - (B7) layer was in contact with the surface of the polycarbonate plate.

On the other hand, "APCFH1" (trade name, manufactured by Nitto Denko Corp. was adhered to a polycarbonate plate of a width of 40 mm, a length of 45 mm and a thickness of 2 mm. The polycarbonate plate was adhered to the punched double-faced pressure-sensitive adhesive tape or sheet, in such a manner that the surface at the side of "APCFH1" (trade name) was in contact with the upper surface of the punched double-faced pressure-sensitive adhesive tape or sheet.

The sample in this state was let to stand for 24 hours at 23°C, then fixed in a holder of a shape as illustrated in Fig. 4, and was dropped vertically from a height of 1 m onto a marble (30 times at maximum), and, in case without peeling even after 30 drops, was further dropped vertically from a height of 1.5 m onto a marble (50 times at maximum), and the dropping impact resistance was evaluated by a number of drops after which the smaller polycarbonate plate was peeled off from the larger polycarbonate plate.

Figs. 3A to 5 are schematic views illustrating the method of evaluating the dropping impact resistance, in evaluating the dropping impact resistance of Examples. Fig. 3A is a schematic view illustrating the shape of the punched double-faced pressure-sensitive adhesive tape or sheet, Fig. 3B is a schematic plan view when the two polycarbonate plates are adhered by the double-faced pressure-sensitive adhesive tape or sheet; and Fig. 3C is a schematic lateral view of Fig. 3B. Fig. 4A, 4B and 4C are schematic views illustrating the shape of a holder for fixing the two polycarbonate plates adhered by the double-faced pressure-sensitive adhesive tape or sheet, wherein Fig. 4A, is a schematic plan view, Fig. 4B is a schematic cross-sectional view along a line X-X in Fig. 4A, and Fig. 4C is a schematic cross-sectional view along a line Y-Y in Fig. 4A. Fig. 5 is a schematic view illustrating a state where the holder, in which the two polycarbonate plates adhered by the double-faced pressure-sensitive adhesive tape or sheet are fixed, is dropped from a height of 1 m or 1.5 m. In Figs. 3A to 4C, illustrated are a polycarbonate plate 5, a double-faced pressure-sensitive adhesive tape or sheet 6, a polycarbonate plate 7, "APCFH1" (trade name) 8, a holder 9, a main body portion 9a, an engaging member 9b, a screw 9b1, and a marble 10.

In the holder 9 illustrated in Figs. 4A to 4C, the main body portion 9a is formed by an acrylonitrile-butadiene-styrene copolymer (so-called ABS resin), and is capable of fixing therein the two polycarbonate plates adhered by the double-faced pressure-sensitive adhesive tape or sheet by the metal engaging member 9b. A screw 9b1 is utilized in fixation by the metal fixing member 9b. The holder 9 has a weight of 100 g.

Table 1

| | | Example | | | | | Comp. Example | |
|---|---|---|---|---|---|---|---|---|
| | | 1 | 2 | 3 | 4 | 5 | 1 | 2 |
| Repulsion resistance | | | | | | | | |
| separation distance (mm) | | 0.02 | 0.01 | 0.02 | 0.02 | 0.01 | 0.02 | 0.02 |
| Dropping impact resistance | | | | | | | | |
| | number of drops from 1m | >30 | >30 | >30 | >30 | >30 | 13 | 10 |
| | number of drops from 1.5m | 18 | 4 | > 50 | 1 | 7 | - | - |

Table 2

| | Comp. Example | | | | | |
|---|---|---|---|---|---|---|
| | 3 | 4 | 5 | 6 | 7 | 8 |
| Repulsion resistance | | | | | | |
| separation distance (mm) | 0.02 | peeled *1 | peeled *1 | peeled *1 | peeled *2 | 0.02 |
| Dropping impact resistance | | | | | | |
| number of drops from 1m | 7 | > 30 | > 30 | > 30 | > 30 | 8 |
| number of drops from 1.5 m | - | 11 | 5 | > 50 | 5 | - |

*1: peeling at the interface between double-faced pressure-sensitive adhesive tape or sheet and polycarbonate plate
*2: peeling at the interface between double-faced pressure-sensitive adhesive tape or sheet and "APCFH1" (trade name)

As shown in Tables 1 and 2, each of the double-faced pressure-sensitive adhesive tapes or sheets of Examples was excellent in the repulsion resistance. Therefore, the double-faced pressure-sensitive adhesive tapes or sheets of Examples can maintain a satisfactorily adhered state without peeling, even when an FPC is adhered to the backlight unit and the liquid crystal display module unit.

Also each of the double-faced pressure-sensitive adhesive tapes or sheets of Examples was excellent in the dropping impact resistance. Therefore, the double-faced pressure-sensitive adhesive tapes or sheets of Examples can effectively support the liquid crystal display module unit even in an adhered state to the liquid crystal display module unit and the backlight unit.

While the present invention has been described in detail and with reference to specific embodiments thereof, it will be apparent to one skilled in the art that various changes and modifications can be made therein without departing from the scope thereof.

This application is based on Japanese patent application No. 2006-070348 filed March 15, 2006 and Japanese patent application No. 2007-012883 filed January 23, 2007, the entire contents thereof being hereby incorporated by reference.

Further, all the documents cited herein are incorporated by reference.

**Claims**

1.   A double-faced pressure-sensitive adhesive tape or sheet, which comprises:

   a base material;
   a pressure-sensitive adhesive layer disposed on one surface of the base material, which is a pressure-sensitive adhesive layer (A) including a pressure-sensitive adhesive composition containing:

      an acrylic polymer (A1), and
      a silicone rubber fine particle (A2) in a proportion of from 3 to 50 parts by weight with respect to 100 parts by weight of the acrylic polymer (A1),
      said layer (A) being used so as to adhere to the liquid crystal display module unit; and
      another pressure-sensitive adhesive layer disposed on the other surface of the base material, which is a pressure-sensitive adhesive layer (B) including a pressure-sensitive adhesive composition containing:

      an acrylic polymer (B1), and
      a low-molecular weight polymer component (B2), which contains, as a principal monomer component, an ethylenic unsaturated monomer having a glass transition temperature of from 60 to 190°C when it is formed into a homopolymer and having a cyclic structure within the molecule thereof, and which has a weight-average molecular weight equal to or higher than 3,000 but lower than 20,000, in a proportion of from 5 to 35 parts by weight with respect to 100 parts by weight of the acrylic polymer (B1),
      said layer (B) being used so as to adhere to the backlight,

wherein said pressure-sensitive adhesive tape or sheet is for use in fixing a liquid crystal display module unit and a backlight unit.

2. A double-faced pressure-sensitive adhesive tape or sheet having a light-reflective property and/or a light-shielding property, which comprises:

a base material;
a pressure-sensitive adhesive layer disposed on one surface of the base material, which is a pressure-sensitive adhesive layer (A) including a pressure-sensitive adhesive composition containing:

an acrylic polymer (A1), and
a silicone rubber fine particle (A2) in a proportion of from 3 to 50 parts by weight with respect to 100 parts by weight of the acrylic polymer (A1),
said layer (A) being used so as to adhere to the liquid crystal display module unit; and
another pressure-sensitive adhesive layer disposed on the other surface of the base material, which is a pressure-sensitive adhesive layer (B) including a pressure-sensitive adhesive composition containing:

an acrylic polymer (B1), and
a low-molecular weight polymer component (B2), which contains, as a principal monomer component, an ethylenic unsaturated monomer having a glass transition temperature of from 60 to 190°C when it is formed into a homopolymer and having a cyclic structure within the molecule thereof, and which has a weight-average molecular weight equal to or higher than 3,000 but lower than 20,000, in a proportion of from 5 to 35 parts by weight with respect to100 parts by weight of the acrylic polymer (B1),
said layer (B) being used so as to adhere to the backlight,
said pressure-sensitive adhesive tape or sheet having a reflectance of 60% or higher and/or a transmittance of 0.3% or lower on at least one surface thereof, and

wherein said pressure-sensitive adhesive tape or sheet is for use in fixing a liquid crystal display module unit and a backlight unit.

3. The double-faced pressure-sensitive adhesive tape or sheet according to claim 1, wherein the pressure-sensitive adhesive layer (A) and/or the pressure-sensitive adhesive layer (B) has a gel fraction of from 51 to 70wt%.

4. The double-faced pressure-sensitive adhesive tape or sheet according to claim 2, wherein the pressure-sensitive adhesive layer (A) and/or the pressure-sensitive adhesive layer (B) has a gel fraction of from 51 to 70wt%.

5. The double-faced pressure-sensitive adhesive tape or sheet according to claim 1, wherein the acrylic polymer (A1) in the pressure-sensitive adhesive composition for forming the pressure-sensitive adhesive layer (A) is an acrylic polymer containing, as a principal monomer component, a (meth)acrylic acid alkyl ester having 6 to 12 carbon atoms in the alkyl group thereof, and, as a monomer component, a carboxyl group-containing monomer in a proportion of from 3 to 10 parts by weight with respect to 100 parts by weight of all the monomer components.

6. The double-faced pressure-sensitive adhesive tape or sheet according to claim 2, wherein the acrylic polymer (A1) in the pressure-sensitive adhesive composition for forming the pressure-sensitive adhesive layer (A) is an acrylic polymer containing, as a principal monomer component, a (meth)acrylic acid alkyl ester having 6 to 12 carbon atoms in the alkyl group thereof, and, as a monomer component, a carboxyl group-containing monomer in a proportion of from 3 to 10 parts by weight with respect to 100 parts by weight of all the monomer components.

7. The double-faced pressure-sensitive adhesive tape or sheet according to claims 1, wherein the acrylic polymer (A1) in the pressure-sensitive adhesive composition for forming the pressure-sensitive adhesive layer (A) has a weight-average molecular weight of from 700,000 to 2,000,000.

8. The double-faced pressure-sensitive adhesive tape or sheet according to claims 2, wherein the acrylic polymer (A1) in the pressure-sensitive adhesive composition for forming the pressure-sensitive adhesive layer (A) has a weight-average molecular weight of from 700,000 to 2,000,000.

9. The double-faced pressure-sensitive adhesive tape or sheet according to claim 1, wherein the pressure-sensitive adhesive composition for forming the pressure-sensitive adhesive layer (B) further comprises a silicone rubber fine particle.

10. The double-faced pressure-sensitive adhesive tape or sheet according to claim 2, wherein the pressure-sensitive adhesive composition for forming the pressure-sensitive adhesive layer (B) further comprises a silicone rubber fine particle.

11. The double-faced pressure-sensitive adhesive tape or sheet according to claim 1, wherein the acrylic polymer (B1) in the pressure-sensitive adhesive composition for forming the pressure-sensitive adhesive layer (B) is an acrylic polymer containing, as a principal monomer component, a (meth)acrylic acid alkyl ester having 4 to 12 carbon atoms in the alkyl group thereof, and, as a monomer component, a carboxyl group-containing monomer in a proportion of from 3 to 10 parts by weight with respect to 100 parts by weight of all the monomer components.

12. The double-faced pressure-sensitive adhesive tape or sheet according to claim 2, wherein the acrylic polymer (B1) in the pressure-sensitive adhesive composition for forming the pressure-sensitive adhesive layer (B) is an acrylic polymer containing, as a principal monomer component, a (meth)acrylic acid alkyl ester having 4 to 12 carbon atoms in the alkyl group thereof, and, as a monomer component, a carboxyl group-containing monomer in a proportion of from 3 to 10 parts by weight with respect to 100 parts by weight of all the monomer components.

13. The double-faced pressure-sensitive adhesive tape or sheet according to claim 2, which has a reflective layer for providing a reflectance of 60% or higher on at least one surface of said pressure-sensitive adhesive tape or sheet, said reflective layer being a white-colored layer having a white color or a silver-colored layer having a silver color, wherein the reflective layer is the base material, the pressure-sensitive adhesive layer, or an optional layer other than the base material and the pressure-sensitive adhesive layer.

14. The double-faced pressure-sensitive adhesive tape or sheet according to claim 2, which has a light-shielding layer for providing a transmittance of 0.3% or less, said light-shielding layer being a black-colored layer having a black color, wherein the reflective layer is the base material, the pressure-sensitive adhesive layer, or an optional layer other than the base material and the pressure-sensitive adhesive layer.

15. A liquid crystal display apparatus comprising:

a liquid crystal display module unit;
a backlight unit; and
the double-faced pressure-sensitive adhesive tape or sheet according to claim 1, which fixes the liquid crystal display module unit and the backlight unit.

16. A liquid crystal display apparatus comprising:

a liquid crystal display module unit;
a backlight unit; and
the double-faced pressure-sensitive adhesive tape or sheet according to claim 2, which fixes the liquid crystal display module unit and the backlight unit.

17. The liquid crystal display apparatus according to claim 15, wherein the backlight unit comprises a substrate formed by polycarbonate.

18. The liquid crystal display apparatus according to claim 16, wherein the backlight unit comprises a substrate formed by polycarbonate.

## FIG. 1A

## FIG. 1B

## FIG. 2

FIG. 3A

FIG. 3B

FIG. 3C

## FIG. 4A

## FIG. 4C

## FIG. 4B

## FIG. 5

FALL
DIRECTION

1m OR 1.5m

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004059723 A
- JP 2002235053 A
- JP 2002350612 A
- JP 2004161955 A
- JP 2004184443 A
- JP 2004231736 A
- JP 2004231737 A
- JP 2004156015 A
- JP 2004244499 A
- JP 2002249741 A
- JP 2004053759 A
- JP 2002023663 A
- JP 2006010931 A
- JP 2006070348 A
- JP 2007012883 A